# EUROPEAN PATENT SPECIFICATION

(11) **EP 3 700 141 B1**
(45) Date of publication and mention of the grant of the patent: **31.05.2023**
(21) Application number: 18874309.0
(22) Date of filing: 13.04.2018
(51) Int. Cl.: H04L 12/28

(54) **PILOT INFORMATION TRANSMISSION METHOD AND RELATED DEVICE**
PILOTINFORMATIONÜBERTRAGUNGSVERFAHREN UND ZUGEHÖRIGE VORRICHTUNG
PROCÉDÉ DE TRANSMISSION D'INFORMATIONS DE PILOTE ET DISPOSITIF ASSOCIÉ

(30) Priority: 06.11.2017 CN 201711082921
(43) Date of publication of application: 26.08.2020
(73) Proprietor: Huawei Technologies Co., Ltd., Longgang District Shenzhen, Guangdong 518129 (CN)
(72) Inventor: YIN, Hui, Shenzhen Guangdong 518129 (CN); WANG, Xiang, Shenzhen Guangdong 518129 (CN)
(74) Representative: Maiwald GmbH
(86) International application number: PCT/CN2018/083117
(87) International publication number: WO 2019/085406

(56) References cited:
- WO-A1-2014/176789
- WO-A1-2016/156441
- CN-A- 102 035 613
- CN-A- 102 726 017
- CN-A- 104 079 519
- CN-A- 104 254 977
- CN-A- 106 464 554
- US-A1- 2017 006 154
- US-A1- 2017 180 003

## Description

### TECHNICAL FIELD

Embodiments of the present invention relate to the field of communications technologies, and in particular, to a pilot information transmission method and a related device.

### BACKGROUND

The next-generation copper broadband access technology G.fast uses a twisted pair as a medium and can provide a user with a transmission rate of approximately 1 Gbps. In recent years, the G.fast technology has drawn wide attention and is favored by a growing quantity of operators. The International Telecommunication Union (ITU) standard conference approved the G.mgfast standard in June 2017. According to the G.mgfast standard, a higher rate can be provided for the user. In a framework of the G.mgfast standard, an operator proposes a point-to-multipoint (P2MP) architecture for a twisted-pair network. In the P2MP network architecture, a port of a central office (CO) device is connected to a plurality of customer premises equipments (CPE) through a telephone wire (twisted pair).

In a G.fast system, the CPE extracts information about a pilot tone (a subcarrier of a pilot tone, or referred to as a pilot subcarrier) from a downlink symbol to implement clock synchronization. In the existing G.fast standard, the CPE in an initialization phase selects a maximum of 16 tones from a set of supported carriers as pilot tones, and then feeds back these pilot tones to the CO by using an R-PMD message. In a showtime phase, the CO transmits, on these pilot tones, "00" modulated in a 4QAM mode. The CPE detects, on the downlink symbol, a phase difference between a value actually received on a pilot tone and a value obtained after "00" sent by the CO end undergoes channel attenuation, and then corrects a clock to ensure clock synchronization with the CO side. This manner is applicable only to a point-to-point (P2P) architecture in which a port of the CO is connected to one CPE through a telephone wire (twisted pair). When the manner is directly applied in the P2MP architecture, clock synchronization performance of each CPE cannot be ensured and overall system performance may deteriorate. Therefore, how to enable each CPE in the showtime phase in the P2MP architecture to maintain clock synchronization with the CO is a current technical problem that needs to be resolved urgently. WO2014/176789A1 discloses a clock recovery method, device and system. The method of a central office utilizing an orthogonal sequence to modulate an input signal so as to allow a user end to eliminate far-end crosstalk comprises: the central office respectively generates m DMT signals for each user end, and synchronously transmits the m DMT signals to each user end via n lines connected to n user ends; each line employs one or more pilot tones to transmit the m DMT signals; at least one same pilot tone subset exists in n groups of one or more pilot tones corresponding to the n lines; the coefficients of the pilot tone subsets transmitting the DMT signals on any two lines form an orthogonal matrix.

US2017/180003A1 discloses a distribution point unit using discrete multi-tone technology, the distribution point unit is configured for connection to a wired shared medium associated with an available spectrum, the wired shared medium connecting the distribution point unit with a plurality of users.

### SUMMARY

This application provides a pilot information transmission method and a related device, to enable each terminal (for example, a CPE) in a showtime phase in a P2MP architecture to maintain clock synchronization with a network device (for example, a CO).

A P2MP scenario to which this application is applied is as follows: The network device is connected to a user node by using a twisted pair, the user node is connected to at least two terminals, the at least two terminals comprisea terminal in the showtime phase and a terminal in the initialization phase, and the terminal in the showtime phase and the terminal in the initialization phase communicate with the network device by using the twisted pair in a time division multiplexing mode or a frequency division multiplexing mode.

The present invention is defined by the method of independent claims 1 and 5, and by the apparatus of independent claims 7 and 11. Additional features of the invention are presented in the dependent claims.

### BRIEF DESCRIPTION OF DRAWINGS

FIG. 1 is a schematic diagram of a point-to-multipoint (P2MP) network architecture according to this application;
FIG. 2 is a schematic diagram of a time division multiplexing G.fast line according to this application;
FIG. 3 is a schematic diagram of a frequency division multiplexing G.fast line according to this application;
FIG. 4 is a schematic structural diagram of a terminal according to some embodiments of this application;
FIG. 5 is a schematic structural diagram of a network device according to some embodiments of this application;
FIG. 6 is a schematic structural diagram of a super frame according to this application;
FIG. 7A is a schematic diagram of various tones included on an RMC symbol according to this application;
FIG. 7B is a schematic diagram of various tones included on a data symbol according to this application;
FIG. 8A is a schematic flowchart of updating a pilot subcarrier set (pilot tone set) according to this application;
FIG. 8B is another schematic flowchart of updating a pilot subcarrier set according to this application;
FIG. 8C is still another schematic flowchart of updating a pilot subcarrier set according to this application;
FIG. 9 is a schematic flowchart of a pilot information transmission method according to this application;
FIG. 10A is a schematic diagram of a pilot subcarrier (pilot tone) transmission manner according to this application;
FIG. 10B is a schematic diagram of another pilot subcarrier (pilot tone) transmission manner according to this application;
FIG. 10C is a schematic diagram of still another pilot subcarrier (pilot tone) transmission manner according to this application;
FIG. 10D is a schematic diagram of yet another pilot subcarrier (pilot tone) transmission manner according to this application;
FIG. 10E is a schematic diagram of still yet another pilot subcarrier (pilot tone) transmission manner according to this application;
FIG. 10F is a schematic diagram of a further pilot subcarrier (pilot tone) transmission manner according to this application;
FIG. 10G is a schematic diagram of a still further pilot subcarrier (pilot tone) transmission manner according to this application;
FIG. 10H is a schematic diagram of a yet further pilot subcarrier (pilot tone) transmission manner according to this application; and
FIG. 11 is a schematic structural diagram of a communications system according to this application.

### DESCRIPTION OF EMBODIMENTS

Terms used in DESCRIPTION OF EMBODIMENTS of this application are only used to explain specific embodiments of this application, and are not intended to limit this application. For ease of understanding of implementation of this application, a P2MP network architecture in the embodiments of this application is first described.

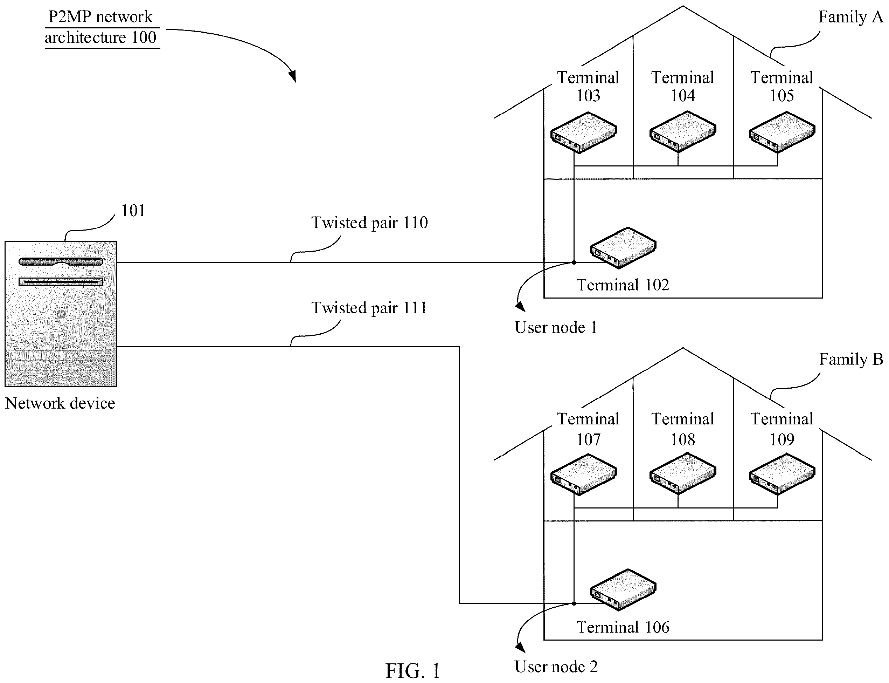

FIG. 1 shows a P2MP network architecture 100 in this application. The P2MP network architecture 100 includes a network device 101, a terminal 102 to a terminal 109, and a twisted pair 110 and a twisted pair 111. The terminal 102 to the terminal 105 are four terminals in a family A. The terminal 102 to the terminal 105 communicate with the network device 101 by using the twisted pair 110. The terminal 106 to the terminal 109 are four terminals in a family B. The terminal 106 to the terminal 109 communicate with the network device 101 by using the twisted pair 111.

In FIG. 1, the P2MP network architecture 100 that includes one network device, eight terminals, and two twisted pairs is used as an example. However, in actual application, a quantity of network devices included in the P2MP network architecture 100 is not limited to one, and may be multiple. A quantity of terminals included in the P2MP network architecture 100 is not limited to 8, and may be another quantity. A quantity of twisted pairs included in the P2MP network architecture 100 is not limited to 2, and may be another quantity.

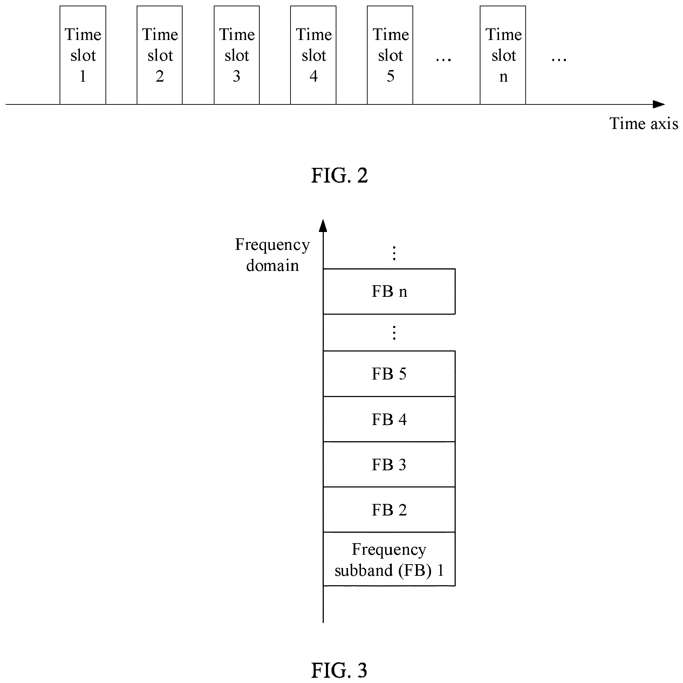

In the P2MP network architecture shown in FIG. 1, a plurality of terminals in a same family communicate with a network device by using a same twisted pair. For example, in FIG. 1, there is one user node in each family. The plurality of terminals in each family are connected to the user node, and are further connected to the twisted pair, to communicate with the network device 101. The terminal 102 to the terminal 105 in the family A are all connected to a user node 1, and are further connected to the twisted pair, to communicate with the network device 101. The terminal 106 to the terminal 109 in the family B are all connected to a user node 2, and are further connected to the twisted pair, to communicate with the network device 101. The plurality of terminals in the same family communicate with the network device by using one twisted pair. Therefore, to implement interference-free interconnection and interworking between the network device and the plurality of terminals, the following two solutions may be used in this application. Solution 1: The terminals in the same family use the same twisted pair in a time division multiplexing mode. To be specific, time is divided into a plurality of time slots (as shown in FIG. 2), and the terminals each occupy a different time slot. For example, in FIG. 2, it is assumed that four terminals in the family A are all in a data transmission phase (the data transmission phase means that the terminals are in a showtime phase, and the showtime phase refers to a status in which an initialization process is completed and data transmission is started). In this case, the terminal 102 in the family A occupies a time slot 1, the terminal 103 occupies a time slot 2, the terminal 104 occupies a time slot 3, the terminal 105 occupies a time slot 4, the terminal 102 occupies a time slot 5, and so on. In this way, interconnection and interworking between the plurality of terminals and the network device can be implemented, and communication of one terminal is not interfered with by another. Solution 2: The terminals in the same family use the same twisted pair in a frequency division multiplexing mode. To be specific, a frequency band is divided into a plurality of frequency subbands (as shown in FIG. 3), and the terminals each occupy a different frequency subband. For example, in FIG. 3, in the family A, the terminal 102 occupies a frequency subband 1 (FB 1), the terminal 103 occupies a frequency subband 2 (FB 2), the terminal 104 occupies a frequency subband 3 (FB 3), the terminal 105 occupies a frequency subband 4 (FB 4), the terminal 102 occupies a frequency subband 5 (FB 5), and so on. FB 1, FB 2, and the like represent frequency subbands. In this way, interconnection and interworking between the plurality of terminals and the network device can be implemented, and communication of one terminal is not interfered with by another.

The network device in this application may be any one of the following devices: a central office (CO) device, a multi-dwelling unit (MDU), a multi-tenant unit (MTU), a digital subscriber line access multiplexer (DSLAM), a multi-service access node (MSAN), an optical network unit (ONU), and the like.

The terminal in this application may be a customer premises equipment (CPE), or may be a modem.

This application uses the P2MP network architecture as an example to describe the embodiments of the present invention. The embodiments of the present invention may be further applied to another network architecture.

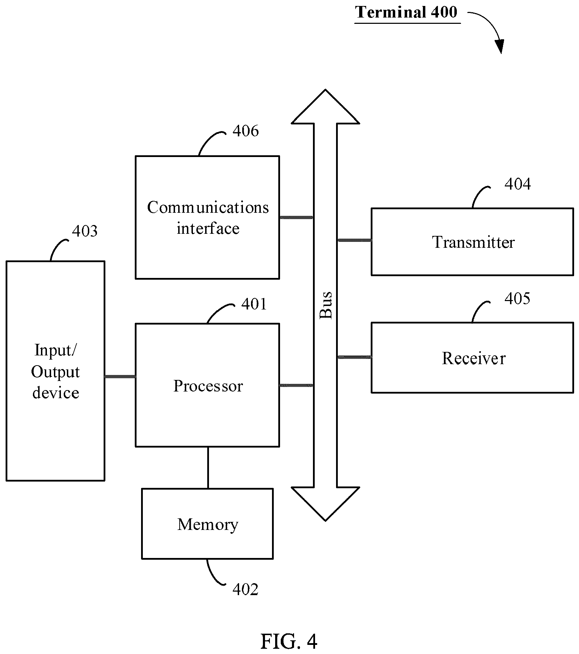

FIG. 4 shows a terminal 400 according to some embodiments of this application. As shown in FIG. 4, the terminal 400 includes one or more processors 401, a memory 402, an input/output (I/O) device 403, a transmitter 404, a receiver 405, and a communications interface 406. These components may be connected by using a bus or in another manner. In FIG. 4, that the components are connected by using a bus is used as an example.

The processor 401 may be implemented as one or more central processing unit (CPU) chips, cores (for example, a multi-core processor), a field programmable gate array (FPGA), an application-specific integrated circuit (ASIC), and/or a digital signal processor (DSP), and/or may be a part of one or more ASICs. The processor 401 may be configured to execute any solution described of the present invention, including a pilot information transmission method. The processor 401 may be implemented by hardware or a combination of hardware and software.

The memory 402 is coupled to the processor 401 of the terminal, and is configured to store various software programs and/or a plurality of sets of instructions. Specifically, the memory 402 may include a secondary memory, a read-only memory (ROM), or a random access memory (RAM).

The secondary memory usually includes one or more disk drives or tape drives and is used for non-volatile storage of data, and serves as an over-flow data storage device if the RAM is not large enough to store all working data. The secondary memory may be configured to store programs, and when the programs are to be executed, the programs are loaded into the RAM. The ROM is configured to store an instruction that is read and data that may be read during program execution. The ROM is a non-volatile storage device with a storage capacity that is usually smaller than a storage capacity of the secondary memory. The RAM is configured to store volatile data and may be further configured to store an instruction. Access to the ROM and the RAM is usually faster than access to the secondary memory.

The I/O device 403 is optional or may be separated from the rest components of the terminal 400. The I/O device 403 may include a video monitor, a liquid crystal display (LCD), a touchscreen display, or a display of another type. The I/O device 403 may include one or more keyboards, mouse devices, or track balls, or other well-known input devices.

The transmitter 404 may be used as an output device of the terminal 400. For example, data may be transmitted from the terminal 400. The receiver 405 may be used as an input device of the terminal 400, for example, may transmit data to the terminal 400. In addition, the transmitter 404 may include one or more optical transmitters and/or one or more electrical transmitters. The receiver 405 may include one or more optical receivers and/or one or more electrical receivers. The transmitter 404/receiver 405 may be in a form of the following: a modem, a modem group, an Ethernet card, a universal serial bus (USB) interface card, a serial interface, a token ring card, a fiber distributed data interface (FDDI) card, and the like.

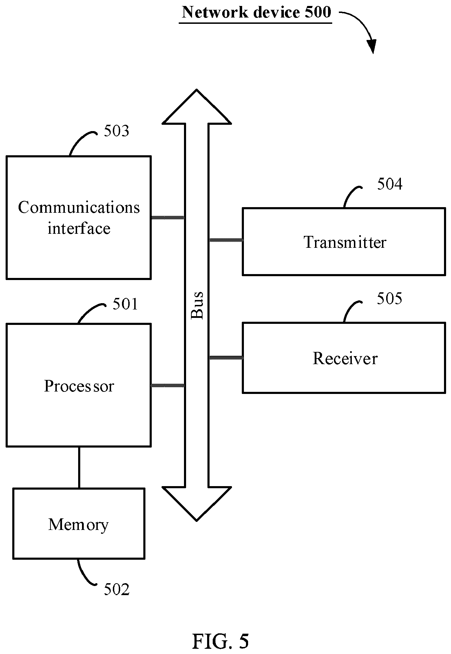

The communications interface 406 may be used by the terminal 400 to communicate with another communications device, for example, a network device. Specifically, the network device may be a network device 500 shown in FIG. 5. Specifically, the communications interface 406 may be a wired interface, for example, a twisted-pair interface. The terminal 400 is connected to a twisted pair by using the twisted-pair interface, to perform wired communication with the network device 500 by using the twisted pair. In addition, a wireless interface may be further configured in the terminal 400, for example, one or more of a global system for mobile communications (GSM) (2G) communications interface, a wideband code division multiple access (WCDMA) (3G) communications interface, a long term evolution (LTE) (4G) communications interface, or the like, or a communications interface of 5G or a future new radio interface. The wireless interface is used by the terminal 400 to perform wireless communication with a network device.

In addition to the communications components shown in FIG. 4, the terminal 400 may further include another communications component, for example, a Bluetooth module or a wireless fidelity (Wi-Fi) module. The terminal 400 may support the G.fast standard, and communicate with a network device in a wired communication manner, for example, using a twisted pair. In addition, the terminal 400 may further support a wireless communication signal, for example, a cellular signal, a satellite signal, or a short-wave signal.

In some embodiments of this application, the memory 402 may be configured to store an implementation program, on the terminal 400 side, of a pilot information transmission method provided in one or more embodiments of this application. For implementation of the pilot information transmission method provided in one or more embodiments of this application, refer to the following embodiments.

The processor 401 may be configured to read and execute a computer readable instruction. Specifically, the processor 401 may be configured to invoke a program stored in the memory 402, for example, the implementation program of the pilot information transmission method provided in one or more embodiments of this application on the terminal side, and execute an instruction included in the program.

It may be understood that the terminal 400 may be any one of the terminal 102 to the terminal 109 in the P2MP network architecture 100 shown in FIG. 1, and may be implemented as a CPE or the like.

It should be noted that the terminal 400 shown in FIG. 4 is only an implementation in the embodiments of this application. In actual application, the terminal 400 may further include more or fewer components, and this is not limited herein.

FIG. 5 shows a network device according to some embodiments of this application. As shown in FIG. 5, the network device 500 may include one or more network device processors 501, a memory 502, a communications interface 503, a transmitter 504, and a receiver 505. These components may be connected by using a bus or in another manner. In FIG. 5, that the components are connected by using a bus is used as an example.

The processor 501 may be implemented as one or more central processing unit (CPU) chips, cores (for example, a multi-core processor), a field programmable gate array (FPGA), an application-specific integrated circuit (ASIC), and/or a digital signal processor (DSP), and/or may be a part of one or more ASICs. The processor 501 may be configured to execute any solution described in the foregoing embodiments of the present invention, including a pilot information transmission method. The processor 501 may be implemented by hardware or a combination of hardware and software.

The memory 502 is coupled to the processor 501, and is configured to store various software programs and/or a plurality of sets of instructions. Specifically, the memory 502 may include a high-speed random access memory, and may include a non-volatile memory, for example, one or more disk storage devices, flash memory devices, or other non-volatile solid-state storage devices. The memory 502 may further store a network communications program. The network communications program may be used to communicate with one or more additional devices, terminal devices, and network devices.

The communications interface 503 may be used by the network device 500 to communicate with another communications device, for example, a terminal. Specifically, the terminal may be the terminal 400 shown in FIG. 4. Specifically, the communications interface 503 may be a wired interface, for example, a twisted-pair interface. The network device 500 is connected to a twisted pair by using the twisted-pair interface, to perform wired communication with the terminal 400 by using the twisted pair. In addition, a wireless interface may be further configured in the network device 500, for example, one or more of a global system for mobile communications (GSM) (2G) communications interface, a wideband code division multiple access (WCDMA) (3G) communications interface, a long term evolution (LTE) (4G) communications interface, or the like, or a communications interface of 5G or a future new radio interface. The wireless interface is used by the network device 500 to perform wireless communication with the terminal.

The transmitter 504 may be used as an output device of the terminal 500. For example, data may be transmitted from the terminal 500. The receiver 505 may be used as an input device of the terminal 500, for example, may transmit data to the terminal 500. In addition, the transmitter 504 may include one or more optical transmitters and/or one or more electrical transmitters. The receiver 505 may include one or more optical receivers and/or one or more electrical receivers. The transmitter 504/receiver 505 may be in a form of the following: a modem, a modem group, an Ethernet card, a universal serial bus (USB) interface card, a serial interface, a token ring card, a fiber distributed data interface (FDDI) card, and the like.

The processor 501 may be configured to read and execute a computer readable instruction. Specifically, the processor 501 may be configured to invoke a program stored in the memory 502, for example, an implementation program of the pilot information transmission method provided in one or more embodiments of this application on the network device side, and execute an instruction included in the program.

In this embodiment of this application, the processor 501 may be configured to read and execute a computer readable instruction. Specifically, the processor 501 may be configured to invoke a program stored in the memory 502, for example, an implementation program of the pilot information transmission method provided in one or more embodiments of this application on the network device side, and execute an instruction included in the program.

It may be understood that the network device 500 may be the network device 101 in the P2MP network architecture 100 shown in FIG. 1, and may be implemented as a central office (CO) device, a multi-dwelling unit (MDU), a multi-dwelling unit (MTU), a digital subscriber line access multiplexer (DSLAM), a multi-service access node (MSAN), an optical network unit (ONU), or the like.

It should be noted that the network device 500 shown in FIG. 5 is only an implementation in this embodiment of this application. In actual application, the network device 500 may further include more or fewer components, and this is not limited herein.

The following describes several time domain concepts such as a time slot, a frame, and a symbol involved in this application.

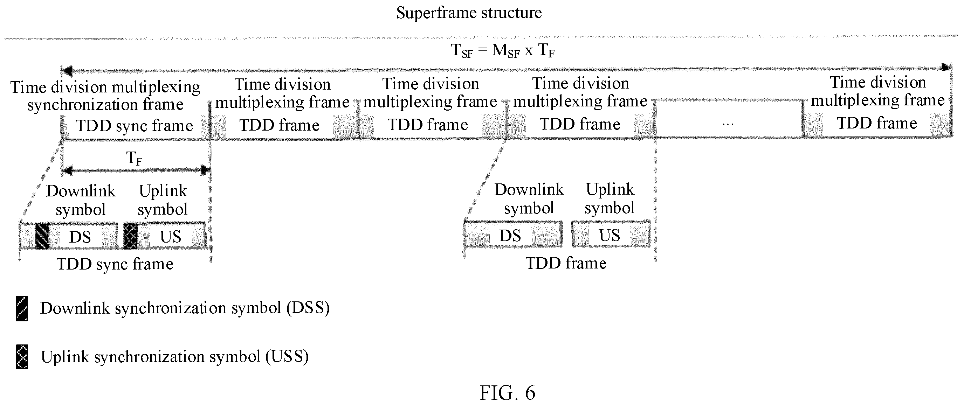

In an implementation of this application, time division multiplexing (Time Division Duplexing, TDD) is used in G.fast communication. The TDD is a half-duplex multiplexing mode in which all subcarriers of an entire frequency band are occupied separately on uplink and downlink in different time periods to send information. To be specific, a transceiver at one end can only send or receive information at one moment, and a peer end can only perform an opposite operation at this moment. One time slot includes one or more TDD frames. It is specified in the G.fast standard that every M_{SF} TDD frames form one super frame. If a length of one TDD frame is T_{F}, a length T_{SF} of one super frame is equal to M_{SF} × T_{F}. One super frame includes one TDD synchronization frame and several TDD frames. In the TDD synchronization frame, a downlink synchronization symbol (DSS), an uplink synchronization symbol USS), a downlink symbol (DS), and an uplink symbol (US) are sent. In the TDD frame, a downlink symbol (DS) and an uplink symbol (US) are sent. For a structure of the super frame, reference may be made to FIG. 6. It can be learned from FIG. 6 that one TDD frame includes several symbols.

This application further relates to several states/phases of the terminal, including a showtime phase (showtime state), an initialization phase (initialization state), and an offline phase (offline state). The following describes these states/phases.

The showtime phase refers to a status in which an initialization process is completed and data transmission is started.

The initialization phase refers to a period of time after an offline terminal sends an online request to the network device and before the terminal enters the showtime phase. In the initialization phase according to the G.fast standard, the terminal selects a maximum of 16 pilot subcarriers (pilot tone) (also referred to as subcarriers of pilot tones) from a set of supported carriers, and then feeds back the selected pilot tones to the network device by using an R-PMD message. The terminal selects a pilot tone mainly based on a signal-to-noise ratio (SNR) of a subcarrier. The SNR of the pilot tone should be higher than a specific threshold (for example, 50 dB) to ensure accuracy of clock tracing.

The offline phase means that the terminal has not sent an online request to the network device currently.

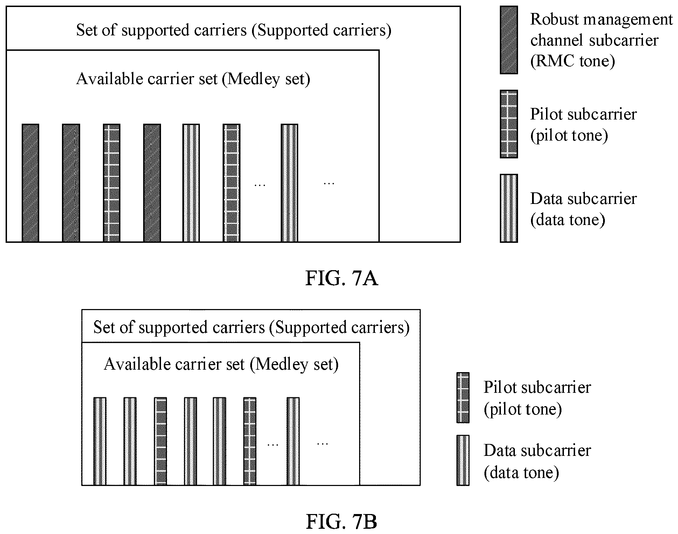

In addition to the pilot tone, this application further involves another two types of tones: a data subcarrier (data tone) and a robust management channel (RMC) tone. For a same family, data tones and RMC tones used by all terminals in the showtime phase are tones other than the pilot tone in a set of available carriers (Medley set). The set of supported carriers is a set of subcarriers that are allocated in one direction for sending. The set is determined by a band plan and DPU-MIB setting constraints of an operator. The Medly set is a set of available carriers. (For example, after line attenuation, some subcarriers cannot carry a bit. These subcarriers are unavailable subcarriers, and these subcarriers belong to supported carriers but do not belong to the Medly set.) The Medly set includes the RMC tone, pilot tone, and data tone. The RMC tone is included only on an RMC symbol, and is not included on a data symbol. For details, reference may be made to FIG. 7A and FIG. 7B. FIG. 7A is a schematic diagram of various tones included on an RMC symbol according to this application. FIG. 7B is a schematic diagram of various tones included on a data symbol according to this application.

As shown in FIG. 2, in a P2MP architecture, terminals in a family occupy different time slots, that is, only one terminal uses one TDD frame at a moment. In this case, terminals that are also in the showtime phase and that do not use the TDD frame also need to maintain clock synchronization with the network device. In this way, when the terminals use the TDD frame, a transmission rate does not decrease due to asynchronization between clocks of the terminal and the network device, and communication quality does not deteriorate. To resolve this issue, an embodiment of this application provides a pilot information transmission method.

Main principles of this application may include the following:
1. When a network device transmits a pilot tone on a downlink symbol, any terminal in a showtime state can receive, on the downlink symbol, a pilot tone separately selected for use by the terminal. Herein, the terminal in a showtime phase includes both a terminal that occupies the downlink symbol (that is, using a TDD frame corresponding to the downlink symbol) and a terminal that is in the showtime phase but does not occupy the downlink symbol. For example, the downlink symbol is a symbol 2 in the time slot 1 shown in FIG. 1, and the terminal 102 occupies the time slot 1 to communicate with the network device 101. When the network device 101 transmits a pilot tone on the symbol 2, if the pilot tone transmitted on the symbol 2 includes a pilot tone 1 selected for use by the terminal 102, the terminal 102 receives, on the symbol 2, the pilot tone 1 selected by the terminal 102, and then corrects a clock of the terminal 102, to implement clock synchronization with the network device 101. In addition, if the pilot tone transmitted on the symbol 2 further includes a pilot tone 2 selected for use by the terminal 103, although the terminal 103 has not occupied the time slot 1 yet, the terminal 103 may also receive, on the symbol 2, the pilot tone 2 selected by the terminal 103, and then correct a clock of the terminal 103, to implement clock synchronization with the network device 101. A beneficial effect of this is as follows: When the terminal 103 occupies the time slot 2 to communicate with the network device 101, the terminal 103 has implemented clock synchronization with the network device 101. Therefore, it can be ensured that a transmission rate does not decrease due to asynchronization between clocks of the terminal 103 and the network device 101 and communication quality does not deteriorate.

It should be noted that "the network device transmits a pilot tone" or "the network device sends a pilot tone" described in this application means that the network device transmits clock information on a subcarrier corresponding to the pilot tone. Similarly, "the terminal receives the pilot tone" described in this application means that the terminal receives, on the subcarrier corresponding to the pilot tone, the clock information carried in the pilot tone.

2. This application is mainly applied to a P2MP network architecture. There are a plurality of terminals connected to a network device, and each terminal selects a pilot tone used by the terminal. Therefore, the network device needs to maintain a pilot subcarrier set (pilot tone set). The set includes pilot tones separately selected for use by all terminals in a showtime phase and terminals that are about to enter the showtime phase. Herein, the pilot subcarrier set corresponds to a line. Each line has a corresponding pilot tone set. For example, for the P2MP network architecture shown in FIG. 1, four terminals in the family A communicate with the network device 101 by using the twisted pair 110, and four terminals in the family B communicate with the network device 101 by using the twisted pair 111. In this case, pilot tone sets maintained by the network device 101 include a pilot tone set corresponding to the family A and a pilot tone set corresponding to the family B. The pilot tone set corresponding to the family A includes pilot tones separately selected for use by all terminals in the showtime phase and terminals that are about to enter the showtime phase in the four terminals (the terminal 102 to the terminal 105) in the family A. The pilot tone set corresponding to the family B includes pilot tones separately selected for use by all terminals in the showtime phase and terminals that are about to enter the showtime phase in the four terminals (the terminal 106 to the terminal 109) in the family B. It is assumed that the terminal 102 to the terminal 104 in the family A are in the showtime phase, the terminal 105 is in an offline phase, pilot tones selected for use by the terminal 102 include: a pilot tone 1, a pilot tone 2, and a pilot tone 3, pilot tones selected for use by the terminal 103 include: the pilot tone 1 and the pilot tone 2, and pilot tones selected for use by the terminal 104 include: the pilot tone 1. It is assumed that the terminal 106 to the terminal 108 in the family B are in the showtime phase, the terminal 109 is in the offline phase, pilot tones selected for use by the terminal 106 include: the pilot tone 1, a pilot tone 4, and a pilot tone 5, pilot tones selected for use by the terminal 107 include: the pilot tone 1 and the pilot tone 4, and pilot tone selected for use by the terminal 108 includes: the pilot tone 1. Therefore, a format of the pilot tone set maintained by the network device may be shown in Table 1.

**Table 1**

| Family No. | Pilot tone set |
|---|---|
| Family A | Pilot tone 1 (the terminal 102, the terminal 103, and the terminal 104), pilot tone 2 (the terminal 102, and terminal 103), and pilot tone 3 (the terminal 102) |
| Family B | Pilot tone 1 (the terminal 106, the terminal 107, and the terminal 108), pilot tone 4 (the terminal 106, and the terminal 107), and pilot tone 5 (the terminal 106) |

Unless otherwise specified, procedures described in the following embodiments are for a case of one family. Interaction between each family and the network device is independent of each other. In this application, the family A is used as an example for description.

The pilot tone set maintained by the network device may be updated. For example, when a new terminal (for example, a first terminal) requests to go online, or when a terminal (for example, a first terminal) requests to go offline, or when a terminal (for example, a first terminal) requests to update a pilot tone online, the network device updates the pilot tone set stored in the network device. The following describes the three cases in detail.

Case 1: The first terminal requests to go online. When requesting to go online, the first terminal needs to feed back, to the network device by using an initialization message req 1, pilot tones selected for use by the first terminal. After receiving the message, the network device checks whether all pilot tones fed back by the terminal are in the pilot tone set. If some pilot tones are not in the pilot tone set, the network device needs to add these pilot tones to the pilot tone set, and notifies an updated pilot tone set to all the terminals in the showtime phase by using a message req 2 on a broadcast channel. After receiving the notification, the terminal in the showtime phase updates a data tone set, a table b and a table g corresponding to the data tone set, an RMC tone set, and a table b and a table g corresponding to the RMC tone set, and feeds back the updated data tone set and corresponding table b and table g, and the updated RMC tone set and corresponding table b and table g to the network device by using a message req 3. After receiving the feedback from all the terminals in the showtime phase (which indicates that all the terminals in the showtime phase receive the notification of updating the pilot tone set), the network device notifies an effective time of the updated pilot tone set to all the terminals in the showtime phase by using a message req 4. The network device further sends, by using a message req 5, the pilot tone set to the first terminal that requests to go online. The first terminal selects a data tone and an RMC tone from tones that are not in the pilot tone set, and feeds back the data tone set, a table b of the data tone set, a table g of the data tone set, the RMC tone set, a table b of the RMC tone set, and a table g of the RMC tone set to the network device by using a message req 6.

It should be noted that, if a terminal is not involved in an update of a data tone set or an RMC tone set, the terminal also needs to feed back, to the network device, indication information indicating that selection of the data tone set and the RMC tone set is not updated, so that the network device knows that the terminal has learned of the notification of updating the pilot tone set. For example, if a data tone or an RMC tone previously used by the terminal does not include a tone in the updated pilot tone set, and the terminal does not select a tone that is no longer a pilot tone as a data tone or an RMC tone after the pilot tone set is updated, the terminal is not involved in an update of the data tone set or RMC tone set.

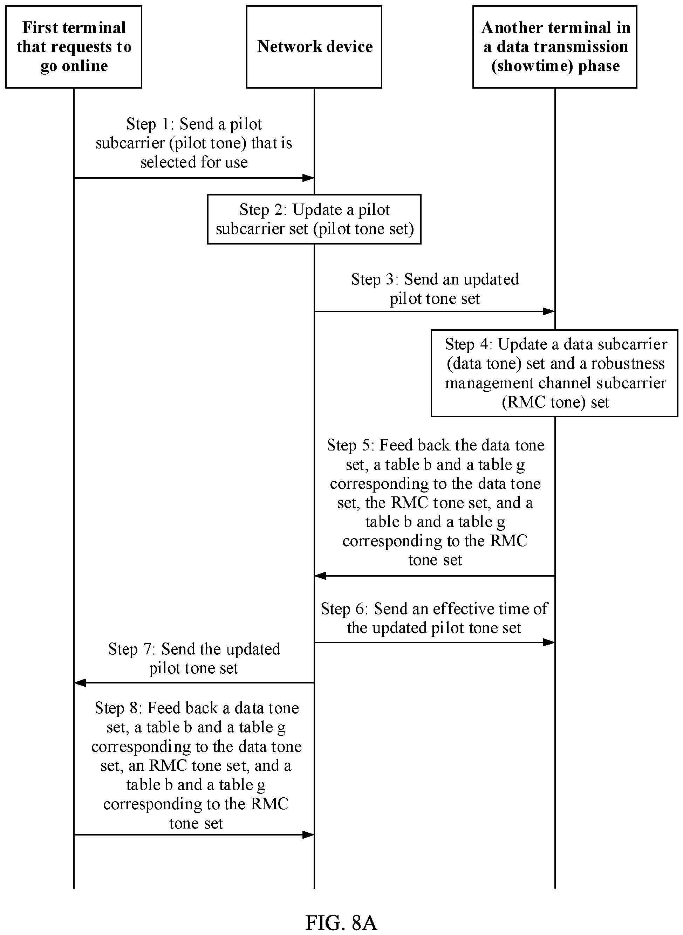

The following describes a specific embodiment for case 1. For the process, reference may be made to FIG. 8A.

Step 1: A first terminal feeds back, to a network device by using an initialization message req 1, a pilot tone selected for use by the first terminal. Assuming that a quantity of pilot tones fed back by the first terminal is n, 1 ≤ n ≤ N. N is a maximum quantity of pilot tones fed back by each terminal.

Step 2: After receiving the req 1 sent by the first terminal, the network device updates a pilot tone set. Specifically, the network device checks whether the pilot tone fed back by the first terminal is in the pilot tone set. If some pilot tones fed back by the first terminal are not in the pilot tone set, the network device needs to add these pilot tones to the pilot tone set, and performs step 3, that is, sends an updated pilot tone set to all terminals in a showtime phase by using a message req 2. If the pilot tone fed back by the first terminal is in the pilot tone set, step 7 is performed.

Step 3: The network device sends the updated pilot tone set to all the terminals in the showtime phase.

Step 4: After receiving the updated pilot tone set sent by the network device, the terminal in the showtime phase updates a data tone set, a table b and a table g corresponding to the data tone set, an RMC tone set, and a table b and a table g corresponding to the RMC tone set. This is because the data tone and RMC tone have to be tones that are not in the pilot tone set in a Medley set. If the pilot tone set is updated, some tones in the updated pilot tone set are very likely to include a data tone or an RMC tone previously used by the terminal in the showtime phase. Alternatively, some pilot tones are no longer pilot tones after the pilot tone set is updated. In this case, the terminal in the showtime phase can use these tones as the data tone or RMC tone to improve a transmission rate.

Step 5: After updating the data tone and the RMC tone, the terminal in the showtime phase further needs to update the table b and the table g corresponding to the data tone and the table b and the table g corresponding to the RMC tone, and feeds back the updated data tone set, the updated table b and the table g corresponding to the data tone set, the updated RMC tone set, and the updated table b and the table g corresponding to the RMC tone set to the network device by using a message req 3.

In this step, all terminals in the showtime phase need to provide feedback.

Step 6: After receiving the feedback from all the terminals in the showtime phase (which indicates that all the terminals in the showtime phase receive the notification of updating the pilot tone set and update a corresponding entry), the network device notifies an effective time of the updated pilot tone set to all the terminals in the showtime phase by using a message req 4.

Step 7: After the pilot tone set takes effect, the network device sends the pilot tone set to the first terminal by using a message req 5.

Step 8: After receiving the pilot tone set sent by the network device, the first terminal selects a data tone and an RMC tone from tones other than those in the pilot tone set in the Medley set, and feeds back the selected data tone, a table b and a table g corresponding to the data tone, the RMC tone, and a table b and a table g corresponding to the RMC tone to the network device by using a message req 6.

It should be noted that step 3 and step 7 may be performed simultaneously, and step 5 and step 8 may also be performed simultaneously.

Description is provided by using an example with reference to the P2MP network architecture 100 shown in FIG. 1. It is assumed that the first terminal that requests to go online is the terminal 102, and terminals in the showtime phase are the terminal 103 and the terminal 104. A processing procedure related to the pilot tone is as follows: The terminal 102 feeds back, to the network device 101 by using an initialization message req 1, a pilot tone selected for use by the terminal 102. After receiving the req 1, the network device 101 checks whether the pilot tone fed back by the terminal 102 that requests to go online is in the pilot tone set. It is assumed that some pilot tones fed back by the terminal 102 are not in the pilot tone set, and the network device 101 needs to add these pilot tones to the pilot tone set, and notifies, by using a message req 2, the terminal 103 and the terminal 104 that the pilot tone set is updated. After receiving the req 2, the terminal 103 and the terminal 104 each feed back an updated data tone set and a corresponding table b and a table g, and an updated RMC tone and a corresponding table b and a table g by using a message req 3 on an uplink symbol in a respective TDD frame. After receiving the feedback from the terminal 103 and the terminal 104, the network device 101 notifies an effective time of the updated pilot tone set to the terminal 103 and the terminal 104 by using a message req 4. After the pilot tone set takes effect, the network device 101 sends the pilot tone set to the terminal 102 by using a message req 5. The terminal 102 selects a data tone and an RMC tone from tones other than those in the pilot tone set in the Medley set, and feeds back a table b and a table g corresponding to the data tone set and a table b and a table g corresponding to the RMC tone set to the network device 101 by using a message req 6.

In addition, if the pilot tone fed back by the terminal 102 is in the pilot tone set, the network device 101 sends the pilot tone set to the terminal 102 by using the message req 5. The terminal 102 selects a data tone and an RMC tone from tones other than those in the pilot tone set, and feeds back a table b and a table g corresponding to the data tone and a table b and a table g corresponding to the RMC tone to the network device 101 by using the message req 6.

Case 2: The first terminal requests to go offline. When the first terminal requests to go offline, the first terminal needs to notify, by using an uplink message req 7, the network device that the first terminal is to go offline. After receiving the message, the network device checks whether a pilot tone used only by the first terminal exists in the pilot tone set. If such a pilot tone exists, the network device deletes the pilot tone from the pilot tone set, and notifies an updated pilot tone set to all terminals in a showtime phase by using a message req 2. After receiving the notification, the terminal in the showtime phase updates a data tone set, a table b and a table g corresponding to the data tone, an RMC tone set, and a table b and a table g corresponding to the RMC tone, and feeds back the updated data tone set and corresponding table b and table g, and the updated RMC tone set and corresponding table b and table g to the network device by using a message req 3. After receiving the feedback from all the terminals in the showtime phase (which indicates that all the terminals in the showtime phase receive the notification of updating the pilot tone set), the network device notifies an effective time of the updated pilot tone set to all the terminals in the showtime phase by using a message req 4.

It should be noted that, if a terminal is not involved in an update of a data tone set or an RMC tone set, the terminal also needs to feed back, to the network device, indication information indicating that selection of the data tone set and the RMC tone set is not updated, so that the network device knows that the terminal has learned of the notification of updating the pilot tone set. For example, if a data tone or an RMC tone previously used by the terminal does not include a tone in the updated pilot tone set, and the terminal does not select a tone that is no longer a pilot tone as a data tone or an RMC tone after the pilot tone set is updated, the terminal is not involved in an update of the data tone set or RMC tone set.

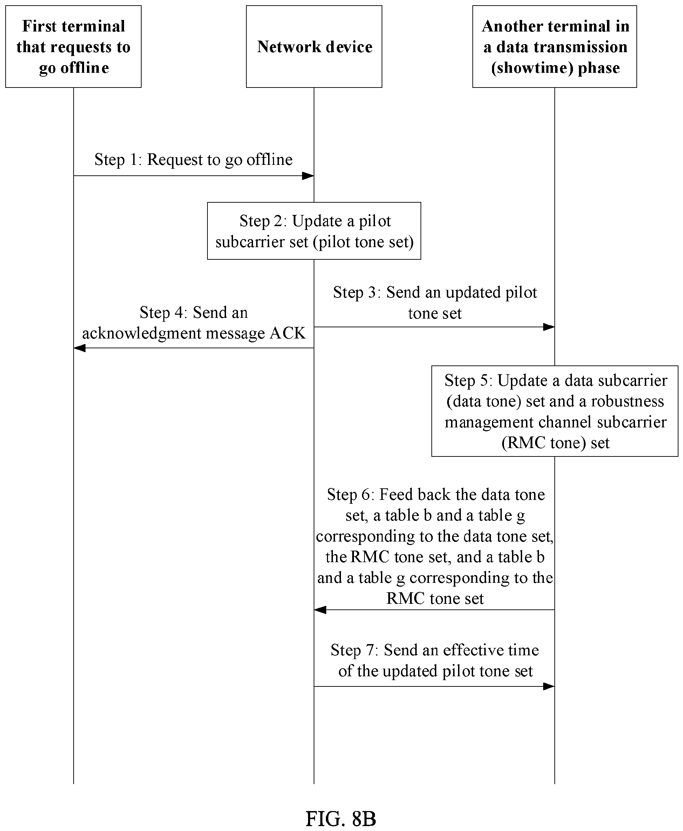

The following describes a specific embodiment for case 2. For the process, reference may be made to FIG. 8B.

Step 1: A first terminal notifies, by using a message req 7, a network device that the first terminal is to go offline.

Step 2: After receiving the req 7 sent by the first terminal, the network device updates a pilot tone set. Specifically, the network device needs to check whether a pilot tone used only by the first terminal exists in the pilot tone set. If such a pilot tone exists, the network device deletes the pilot tone used only by the first terminal from the pilot tone set, and performs step 3, that is, sends an updated pilot tone set to all terminals in a showtime phase by using a message req 2. In addition, the network device further replies to the first terminal with an ACK message (namely, step 4), or does not reply. After receiving the req 7, the network device checks whether the pilot tone used only by the first terminal exists in the pilot tone set. If such a pilot tone does not exist, the network device only needs to reply an ACK message to the first terminal or does not reply, and does not need to perform subsequent steps.

Step 3: The network device sends the updated pilot tone set to all the terminals in the showtime phase by using the message req 2.

Step 4: The network device returns the ACK message to the first terminal.

Step 5: After receiving the req 2, the terminal in the showtime phase updates a data tone set, a table b and a table g corresponding to the data tone, an RMC tone set, and a table b and a table g corresponding to the RMC tone.

Step 6: The terminal in the showtime phase feeds back the updated data tone set, the updated table b and the table g corresponding to the data tone set, the updated RMC tone set, and the updated table b and the table g corresponding to the RMC tone set to the network device by using a message req 3.

In this step, all the terminals in the showtime phase need to provide feedback.

Step 7: After receiving the feedback from all the terminals in the showtime phase, the network device notifies an effective time of the updated pilot tone set to all the terminals in the showtime phase by using a message req 4.

It should be noted that step 3 and step 4 may be performed simultaneously.

Description is provided by using an example with reference to the P2MP network architecture 100 shown in FIG. 1. It is assumed that the first terminal that requests to go offline is the terminal 105, and the terminals in the showtime phase are the terminal 103 and the terminal 104. A processing procedure related to the pilot tone is as follows: The terminal 105 notifies, by using a message req 7, the network device 101 that the terminal 105 is to go offline. After receiving the req 7, the network device 101 returns an ACK to the terminal 105, and checks whether a pilot tone that is selected for use only by the terminal 105 exists in a pilot tone set. If a pilot tone that is selected for use only by the terminal 105 exists in the pilot tone set, the network device 101 deletes the pilot tone from the pilot tone set, and notifies, by using a message req 2, the terminal 103 and the terminal 104 that the pilot tone set is updated. After receiving the req 2, the terminal 103 and the terminal 104 each feed back an updated data tone set and a corresponding table b and a table g, and an updated RMC tone and a corresponding table b and a table g by using a message req 3 on an uplink symbol in a respective TDD frame. After receiving the feedback from the terminal 103 and the terminal 104, the network device 101 notifies an effective time of the updated pilot tone set to the terminal 103 and the terminal 104 by using a message req 4.

In addition, if the network device 101 finds, after checking the pilot tone set, that no pilot tone that is selected for use only by the terminal 105 exists, the network device 101 only needs to return an ACK to the terminal 105, and does not need to perform another operation. In other words, an update of the pilot tone set is not triggered.

Case 3: Because a channel has changed, the first terminal in the showtime phase requests to update selection of a pilot tone. The first terminal feeds back, to the network device by using an uplink message req 8, a pilot tone that is selected by the first terminal in the updated selection. After receiving the message, the network device first deletes a pilot tone that is used only by the first terminal and will be no longer used by the first terminal from the pilot tone set, and then adds, to the pilot tone set, a pilot tone that is selected by the first terminal in the updated selection and that is not in the pilot tone set. In addition, the network device notifies an updated pilot tone set to all the terminals in the showtime phase by using a message req 2 on a broadcast channel. After receiving the notification, the terminal in the showtime phase updates a data tone set, a table b and a table g corresponding to the data tone, an RMC tone set, and a table b and a table g corresponding to the RMC tone, and feeds back the updated data tone set and corresponding table b and table g, and the updated RMC tone set and corresponding table b and table g to the network device by using a message req 3. After receiving the feedback from all the terminals in the showtime phase (which indicates that all the terminals in the showtime phase receive a notification of updating the pilot tone set), the network device notifies an effective time of the updated pilot tone set to all the terminals in the showtime phase by using a message req 4.

It should be noted that, if a terminal is not involved in an update of a data tone set or an RMC tone set, the terminal also needs to feed back, to the network device, indication information indicating that selection of the data tone set and the RMC tone set is not updated, so that the network device knows that the terminal has learned of the notification of updating the pilot tone set. For example, if a data tone or an RMC tone previously used by the terminal does not include a tone in the updated pilot tone set, and the terminal does not select a tone that is no longer a pilot tone as a data tone or an RMC tone after the pilot tone set is updated, the terminal is not involved in an update of the data tone set or RMC tone set.

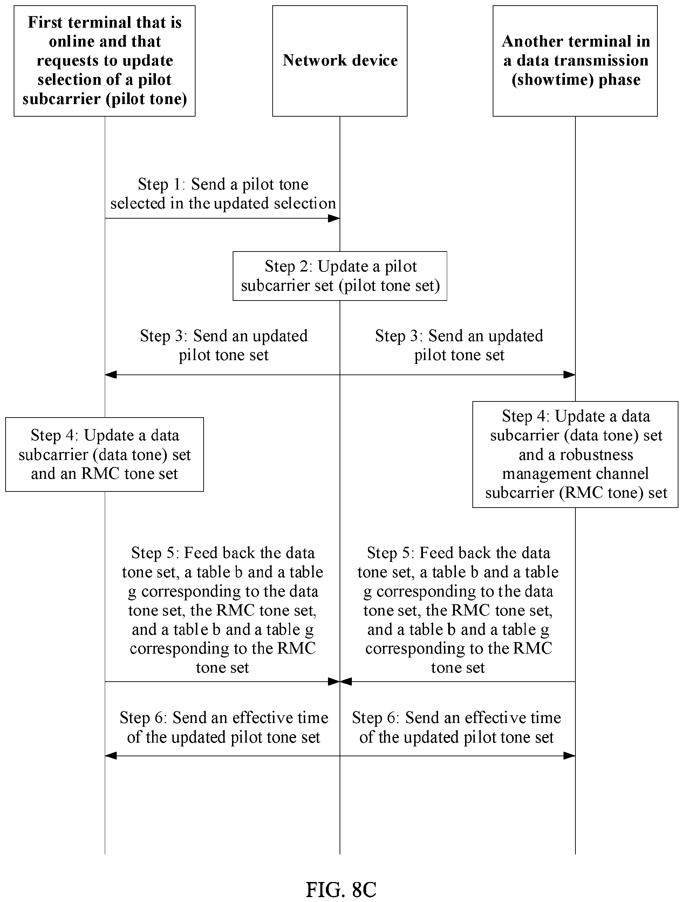

The following describes a specific embodiment for case 3. For the process, reference may be made to FIG. 8C.

Step 1: A first terminal feeds back, to a network device by using a message req 9, a pilot tone that the first terminal requests to update in updated selection. Assuming that a quantity of pilot tones fed back by the first terminal that requests to update the selection of a pilot tone and that is in a showtime phase is n, 1 ≤ n ≤ N. N is a maximum quantity of pilot tones fed back by each terminal. A reason that the first terminal sends a request for updating selection of a pilot tone may be that a channel has changed. Consequently, an SNR of a pilot tone originally selected by the first terminal decreases, and cannot meet a requirement of clock synchronization for the first terminal.

Step 2: After receiving the req 9 sent by the first terminal, the network device updates a pilot tone set. Specifically, the network device first checks whether a pilot tone used only by the first terminal exists in the pilot tone set. If the pilot tone exists, the network device deletes the pilot tone from the pilot tone set. The network device then checks whether the pilot tone fed back by the first terminal that request to update selection of a pilot tone is in the pilot tone set. If the pilot tone is not in the pilot tone set, the network device needs to add the pilot tone that is not in the pilot tone set to the pilot tone set. If the pilot tone fed back by the first terminal is in the pilot tone set, and there is no pilot tone selected for use only by the first terminal, that is, the pilot tone set does not need to be updated, the procedure is ended with this step; otherwise, the next step is performed.

Step 3: The network device sends the updated pilot tone set to all terminals in the showtime phase by using a message req 2.

Step 4: After receiving the req 2, the terminal in the showtime phase updates a data tone set, a table b and a table g corresponding to the data tone, an RMC tone set, and a table b and a table g corresponding to the RMC tone.

Step 5: The terminal in the showtime phase feeds back the updated data tone set, the updated table b and the table g corresponding to the data tone set, the updated RMC tone set, and the updated table b and the table g corresponding to the RMC tone set to the network device by using a message req 3.

In this step, all the terminals in the showtime phase need to provide feedback.

Step 6: After receiving the feedback from all the terminals in the showtime phase (which indicates that all the terminals in the showtime phase receive a notification of updating the pilot tone set and update a corresponding entry), the network device notifies an effective time of the updated pilot tone set to all the terminals in the showtime phase by using a message req 4. The table b lists bits that can be actually carried on a line. bi is used to represent a bit carried on an i^{th} tone. The table g lists power fine-tuning factors. gi is used to represent a power fine-tuning factor on the i^{th} tone. The power fine-tuning factor is usually used to adjust transmit power on a subcarrier to ensure that a signal-to-noise ratio of the i^{th} tone can support carrying of bi bits. The data tone and the RMC tone each have a table b and a table g.

It should be noted that names of the foregoing messages req 1 to req 9 are not limited.

It should be noted that step 3 and step 7 may be performed simultaneously, and step 5 and step 8 may also be performed simultaneously.

Description is provided by using an example with reference to the P2MP network architecture 100 shown in FIG. 1. It is assumed that the first terminal that is in the showtime phase and that requests to update selection of a pilot tone is the terminal 105, and other terminals in the showtime phase are the terminal 103 and the terminal 104. A processing procedure related to the pilot tone is as follows: The terminal 105 feeds back, to the network device 101 by using a message req 9, a pilot tone selected by the terminal 102 in updated selection. After receiving the req 9, the network device 101 first deletes, from a pilot tone set, a pilot tone that is in the pilot tone set and that is selected for use only by the terminal 105. The network device then checks whether the pilot tone fed back by the terminal 105 is in the pilot tone set. If some pilot tones fed back by the terminal 105 are not in the pilot tone set, the network device 101 needs to add the pilot tones that are not in the pilot tone set to the pilot tone set, and notifies, by using a message req 2, the terminal 103, the terminal 104, and the terminal 105 that the pilot tone set is updated. After receiving the req 2, the terminal 103, the terminal 104, and the terminal 105 feed back an updated data tone set and a corresponding table b and a table g, and an updated RMC tone and a corresponding table b and a table g by using a message req 3 on an uplink symbol in a respective TDD frame. After receiving the feedback from the terminal 103, the terminal 104, and the terminal 105, the network device 101 notifies an effective time of the updated pilot tone set to the terminal 103, the terminal 104, and the terminal 105 by using a message req 4.

Particularly, if the network device 101 finds, after receiving the req 9, that no pilot tone selected for use only by the terminal 105 exists in the pilot tone set, and the pilot tone fed back by the terminal 105 by using the req 9 is in the pilot tone set, the network device 101 only needs to feed back an ACK to the terminal 105.

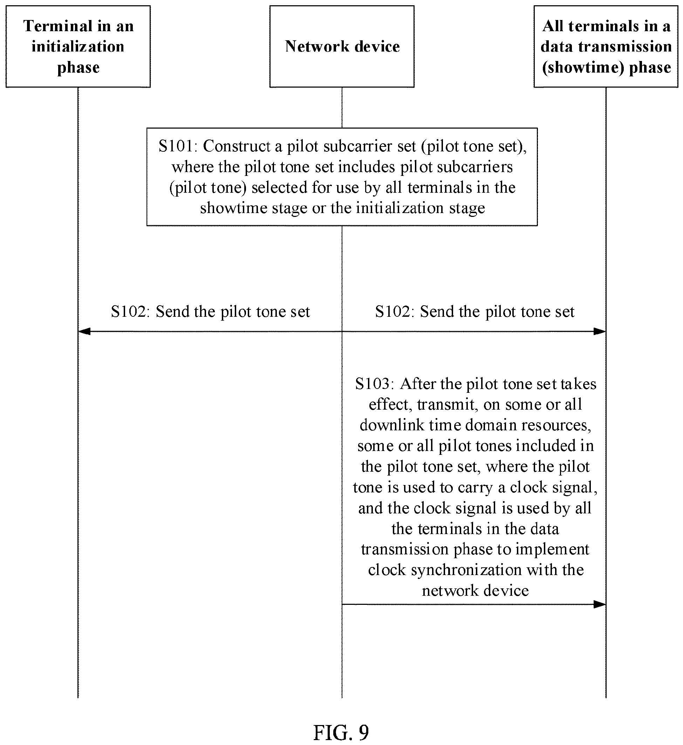

FIG. 9 is a schematic flowchart of a pilot information transmission method according to this application. The method includes but is not limited to the following steps.

S 101. A network device constructs a pilot subcarrier set (pilot tone set), where the pilot tone set includes pilot subcarriers (pilot tone) that are selected for use by all terminals in a data transmission (showtime) phase or pilot subcarriers that are selected for use by all terminal in an initialization phase and that are used after the terminals enter the showtime phase or both. The network device is connected to a user node by using a twisted pair, the user node is connected to at least two terminals and an offline terminal, the at least two terminals comprisea terminal in the showtime phase and a terminal in the initialization phase, and the terminal in the showtime phase and the terminal in the initialization phase communicate with the network device by using the twisted pair in a time division multiplexing mode.

In this embodiment of the present invention, for the foregoing case 1, the pilot subcarrier set includes pilot subcarriers selected for use by all the terminals currently in the showtime phase, and includes pilot subcarriers selected for use by the first terminal in the initialization phase. For example, when the first terminal requests to go online, the terminals in the showtime phase include a second terminal and a third terminal. In this case, the pilot subcarrier set includes pilot tones separately selected for use by the first terminal, the second terminal, and the third terminal. For the foregoing case 2, the pilot subcarrier set includes the pilot subcarriers selected for use by all the terminals currently in the showtime phase. For example, when the first terminal requests to go offline, the terminals in the showtime phase include the second terminal and the third terminal. In this case, the pilot subcarrier set includes pilot tones separately selected for use by the second terminal and the third terminal, and no longer includes a pilot tone selected for use only by the first terminal. For the foregoing case 3, the pilot subcarrier set includes the pilot subcarriers selected for use by all the terminals currently in the showtime phase. For example, when the first terminal requests to update the pilot tone online, the terminals in the showtime phase include the first terminal, the second terminal, and the third terminal. In this case, the pilot subcarrier set includes pilot tones separately selected for use by the first terminal, the second terminal, and the third terminal.

The "construction" described in this embodiment of the present invention includes two implementations. In an implementation, when any one of the foregoing case 1 to case 3 occurs, the network device updates a pilot tone set maintained by the network device. In another implementation, when any one of the foregoing case 1 to case 3 occurs, the network device recollects pilot tones separately selected for use by all the terminals in the showtime phase or the initialization phase, to generate a new pilot tone set.

Specifically, for the foregoing case 1, when the first terminal requests to go online, the network device adds a first pilot subcarrier to the pilot subcarrier set, where the first pilot subcarrier is a subcarrier that is selected for use by the first terminal and that is not in the pilot subcarrier set. For example, the pilot tone set includes a pilot tone 1, a pilot tone 2, and a pilot tone 3, and pilot tones selected for use by the first terminal include the pilot tone 2 and a pilot tone 4. In this case, the network device adds the pilot tone 4 to the pilot tone set.

For the foregoing case 2, when the first terminal requests to go offline, the network device deletes a second pilot subcarrier from the pilot subcarrier set, where the second pilot subcarrier is a subcarrier that is selected for use only by the first terminal and will be no longer used by the first terminal. For example, the pilot tone set includes a pilot tone 1, a pilot tone 2, and a pilot tone 3, and pilot tones selected for use by the first terminal include the pilot tone 2 and the pilot tone 3, where the pilot tone 2 is selected for use by the first terminal and another terminal, and the pilot tone 3 is selected for use only by the first terminal. In this case, the network device deletes the pilot tone 3 from the pilot tone set.

For the foregoing case 3, when the first terminal requests to update selection of a pilot subcarrier, the network device deletes a third pilot subcarrier from the pilot subcarrier set, and/or the network device adds a fourth pilot subcarrier to the pilot subcarrier set, where the third pilot subcarrier is a subcarrier that is selected for use only by the first terminal and will be no longer used by the first terminal, and the fourth pilot subcarrier is a subcarrier that is selected for use by the first terminal in updated selection and that is not in the pilot subcarrier set. For example, the pilot tone set includes a pilot tone 1, a pilot tone 2, and a pilot tone 3, and pilot tones previously selected for use by the first terminal include the pilot tone 2 and the pilot tone 3, where the pilot tone 2 is selected for use by the first terminal and another terminal, and the pilot tone 3 is selected for use only by the first terminal. Pilot tones that are selected by the first terminal in updated selection include the pilot tone 2 and a pilot tone 4. In this case, the network device deletes the pilot tone 3 from the pilot tone set, and adds the pilot tone 4 to the pilot tone set.

S102. The network device sends the pilot subcarrier set to all the terminals in the showtime phase and all the terminals in the initialization phase, and all the terminals in the showtime phase and the terminals in the initialization phase receive the pilot subcarrier set sent by the network device.

In this embodiment of the present invention, once the pilot tone set is updated, the network device sends the updated pilot tone set to all the terminals in the showtime phase by using a broadcast channel. After receiving the updated pilot tone set, the terminal feeds back an updated table b and table g to the network device. If allocation of a data tone and an RMC tone changes, feedback has to be provided. In addition, for the foregoing case 1, in addition to sending the updated pilot tone set to all the terminals in the showtime phase, the network device further needs to send the updated pilot tone set to the first terminal that requests to go online. After the first terminal receives the pilot tone set, the first terminal selects a data tone and an RMC tone from tones that are not in the pilot tone set, and feeds back a table b and a table g corresponding to the data tone set and a table b and a table g corresponding to the RMC tone set to the network device.

It should be noted that, for the foregoing case 1, when sending the updated pilot tone set to all the terminals in the showtime phase, the network device may simultaneously send the updated pilot tone set to the first terminal that requests to go online. Alternatively, the network device may perform the two actions in sequence. For example, the network device first sends the updated pilot tone set to all the terminals in the showtime phase. After the network device receives data tones, tables b corresponding to the data tones, tables g corresponding to the data tone, RMC tones, tables b corresponding to the RMC tone, and tables g corresponding to the RMC tone that are fed back by all the terminals in the showtime phase, the network device sends the updated pilot tone set to the first terminal that requests to go online.

For the foregoing case 2, the network device only needs to send the updated pilot tone set to all the terminals in the showtime phase, and does not need to send the updated pilot tone set to the first terminal that requests to go offline.

For the foregoing case 3, the network device only needs to send the updated pilot tone set to all the terminals in the showtime phase, where the terminals in the showtime phase include the first terminal.

S103. After the pilot subcarrier set takes effect, the network device transmits, on some or all downlink time domain resources, some or all pilot subcarriers included in the pilot subcarrier set. All the terminals in the showtime phase receive, on the some or all downlink time domain resources, the some or all pilot subcarriers included in the pilot subcarrier set sent by the network device, where the pilot subcarrier is used to carry a clock signal, and the clock signal is used by all the terminals in the showtime phase to implement clock synchronization with the network device.

It should be noted that, for the foregoing case 1, after the first terminal that requests to go online enters the showtime phase from the initialization phase, the first terminal also receives, on the some or all downlink time domain resources, the some or all pilot subcarriers included in the pilot subcarrier set sent by the network device, to implement clock synchronization with the network device.

In this embodiment of the present invention, the downlink time domain resource includes but is not limited to a downlink symbol. In this embodiment of the present invention, that the downlink time domain resource is a downlink symbol is used as an example for description. The network device sends, on some or all downlink symbols, the some or all pilot tones included in the pilot tone set. All the terminals in the showtime phase can receive these symbols, extract pilot tones from these symbols, and perform clock tracing based on information of the pilot tones.

For how the network device transmits the pilot tone included in the pilot tone set described in step S103, this embodiment of the present invention provides eight specific implementations, and the following describes the eight specific implementations in detail.

### Implementation 1:

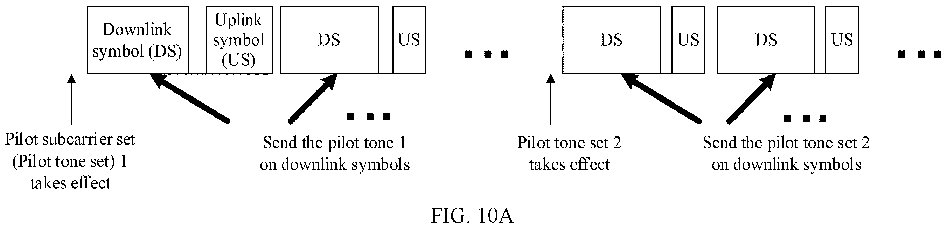

After a pilot tone set takes effect, the network device sends a pilot tone on all downlink symbols. In addition, pilot tones that are sent are all pilot tones in the pilot tone set. FIG. 10A is a schematic diagram of sending a pilot tone in this case. A pilot tone set 1 and a pilot tone set 2 are used to represent two different sets. It is assumed that the pilot tone set 1 takes effect at a moment t1. In this case, the network device sends all the pilot tones in the pilot tone set 1 on all downlink symbols until a new pilot tone set takes effect. For example, in FIG. 10A, the pilot tone set is updated from the pilot tone set 1 to the pilot tone set 2. After the pilot tone set 2 takes effect, the network device sends the pilot tone set 2 on all downlink symbols. In this case, pilot tones transmitted on all downlink symbols in all TDD frames are the same.

### Implementation 2:

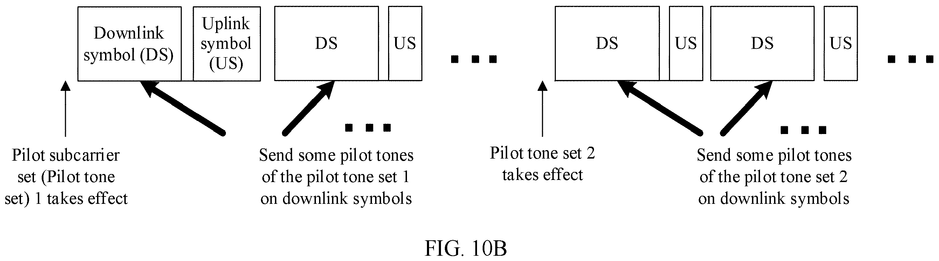

After a pilot tone set takes effect, the network device sends only some pilot tones in the pilot tone set on all downlink symbols. In this case, when sending an updated pilot tone set to all terminals in a showtime phase, the network device indicates specific pilot tones in the pilot tone set that are to be sent subsequently. In this case, before the new pilot tone set takes effect, pilot tones sent on all downlink symbols in each TDD frame are the same. For example, the network device notifies, by using a message req 10, all the terminals in the showtime phase of the updated pilot tone set and the to-be-sent specific pilot tones. The network device may select a pilot tone that is in the pilot tone set and that is selected by a plurality of terminals for sending. FIG. 10B is a schematic diagram of sending a pilot tone in this case. A pilot tone set 1 and a pilot tone set 2 are used to represent two different sets. It is assumed that the pilot tone set 1 takes effect at a moment t1. The network device sends some pilot tones in the pilot tone set 1 on all downlink symbols. The network device notifies the to-be-sent pilot tones before the pilot tone set 1 takes effect. After a new pilot tone set takes effect, for example, in FIG. 10B, the pilot tone set is updated from the pilot tone set 1 to the pilot tone set 2, that is, the pilot tone sent 2 takes effect, the network device sends some pilot tones in the pilot tone set 2 on all downlink symbols.

### Implementation 3:

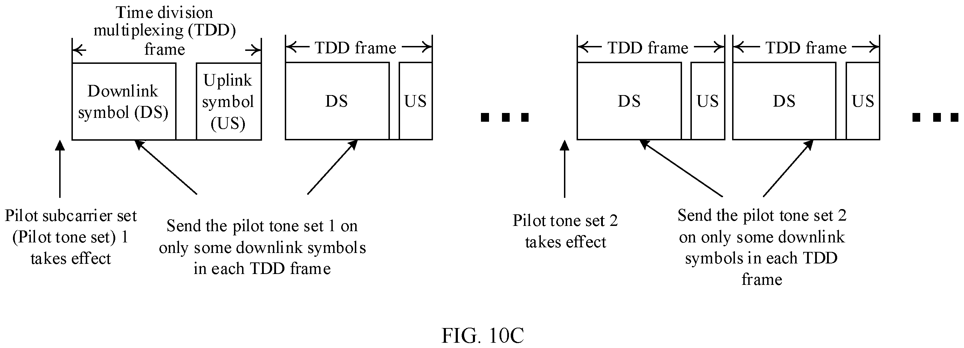

After a pilot tone set takes effect, the network device sends a pilot tone on some downlink symbols in each TDD frame. In addition, pilot tones that are sent are all pilot tones in the pilot tone set. FIG. 10C is a schematic diagram of sending a pilot tone in this case. A pilot tone set 1 and a pilot tone set 2 are used to represent two different sets. It is assumed that the pilot tone set 1 takes effect at a moment t1. In this case, the network device sends all pilot tones in the pilot tone set 1 on some downlink symbols in each TDD frame until a new pilot tone set takes effect. For example, in FIG. 10C, the pilot tone set is updated from the pilot tone set 1 to the pilot tone set 2. After the pilot tone set 2 takes effect, the network device sends the pilot tone set 2 on some downlink symbols in each TDD frame.

The network device may send the pilot tone set on some downlink symbols at a starting part in each TDD frame. In this way, the terminal in the showtime phase only needs to receive these symbols at the starting part in each TDD frame to perform clock tracing. In this way, a transmission rate on some downlink symbols can be increased. Certainly, the network device may alternatively send the pilot tone set on another part of symbols in the TDD frame.

### Implementation 4:

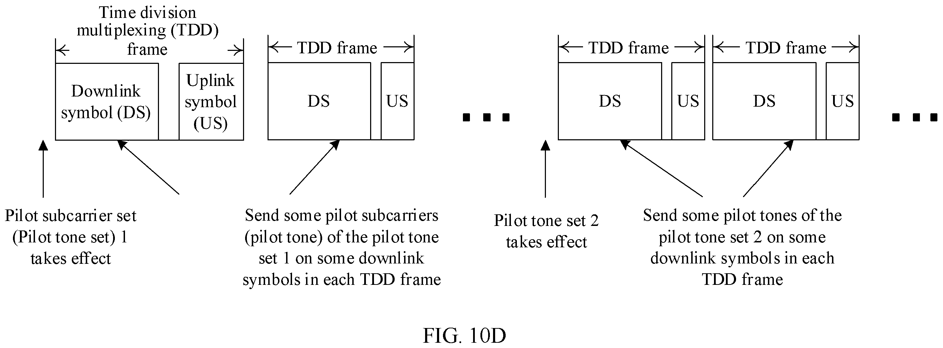

After a pilot tone set takes effect, the network device sends a pilot tone on some downlink symbols in each TDD frame. Pilot tones that are sent are some pilot tones in the pilot tone set. In this case, before a new pilot tone set takes effect, the pilot tones sent on downlink symbols in each TDD frame are the same. FIG. 10D is a schematic diagram of sending a pilot tone in this case. A pilot tone set 1 and a pilot tone set 2 are used to represent two different sets. It is assumed that the pilot tone set 1 takes effect at a moment t1. In this case, the network device sends some pilot tones in the pilot tone set 1 on some downlink symbols in each TDD frame until a new pilot tone set takes effect. For example, in FIG. 10D, the pilot tone set is updated from the pilot tone set 1 to the pilot tone set 2. After the pilot tone set 2 takes effect, the network device sends some pilot tones in the pilot tone set 2 on some downlink symbols in each TDD frame.

The network device may send the pilot tone on some downlink symbols at a starting part in each TDD frame. In this way, the terminal in the showtime phase only needs to receive these symbols at the starting part in each TDD frame to perform clock tracing. Selected pilot tones may be pilot tones that are repeatedly selected by a plurality of terminals. In this way, a transmission rate on some downlink symbols can be further improved.

### Implementation 5:

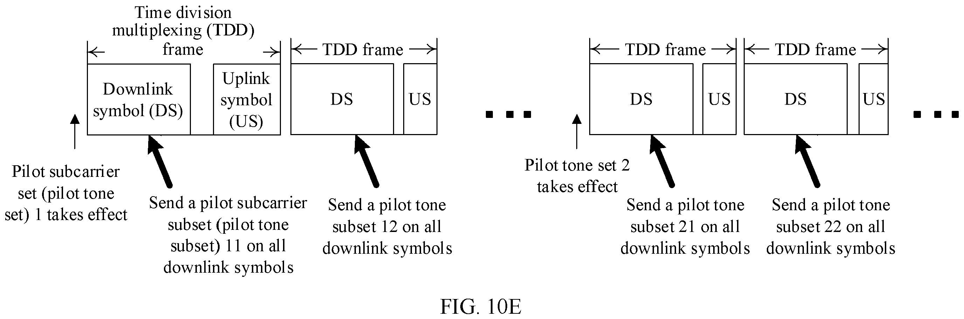

After a pilot tone set takes effect, the network device sends a pilot tone on all downlink symbols. However, the pilot tone sent in each TDD frame is only a subset of the pilot tone set, and these subsets may be different. In this case, before a new pilot tone set takes effect, the pilot tones sent on each TDD frame may be different. FIG. 10E is a schematic diagram of sending a pilot tone in this case. A pilot tone set 1 and a pilot tone set 2 are used to represent two different sets.

A pilot tone subset 11 and a pilot tone subset 12 are used to represent two different subsets of the pilot tone set 1. A pilot tone subset 21 and a pilot tone subset 22 are used to represent two different subsets of the pilot tone set 2. It is assumed that the pilot tone set 1 takes effect at a moment t1. In this case, the network device sends the pilot tone subset 11 on all downlink symbols in a first TDD frame after the pilot tone set 1 takes effect, sends the pilot tone subset 12 on all downlink symbols in a second TDD frame after the pilot tone set 1 takes effect, and so on, until a new pilot tone set takes effect. For example, in FIG. 10E, the pilot tone set is updated from the pilot tone set 1 to the pilot tone set 2. After the pilot tone set 2 takes effect, the network device sends the pilot tone set 21 on all downlink symbols in the first TDD frame after the pilot tone set 2 takes effect, sends the pilot tone set 22 on all downlink symbols in the second TDD frame after the pilot tone set 2 takes effect, and so on.

A method for selecting a subset of a pilot tone set by the network device is described below by using an example. It is assumed that the first TDD frame after the pilot tone set 1 takes effect is allocated to the terminal 102 for use, and the second TDD frame is allocated to the terminal 103 for use. In this case, the network device may send, in the first TDD frame after the pilot tone set 1 takes effect, pilot tones selected for use by the terminal 102 and the terminal 103; and then send, in the second TDD frame, pilot tones selected for use by the terminal 103 and the terminal 104.

### Implementation 6:

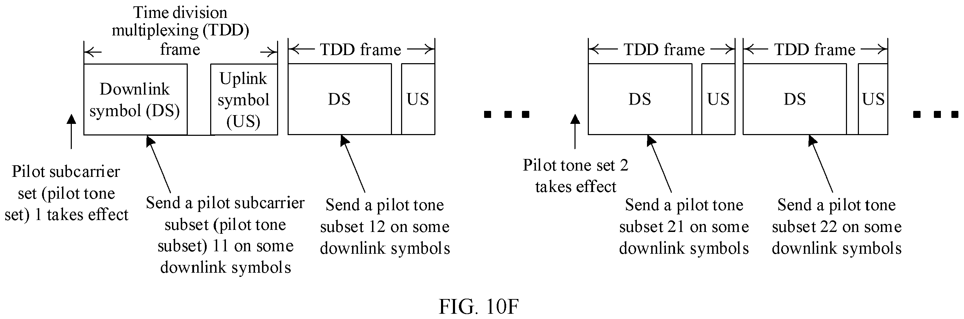

After a pilot tone set takes effect, the network device sends a pilot tone only on some downlink symbols. In addition, the pilot tone sent in each TDD frame is merely a subset of the pilot tone set, and these subsets may be different. In this case, before a new pilot tone set takes effect, pilot tones sent on each TDD frame may be different. FIG. 10F is a schematic diagram of sending a pilot tone in this case. A pilot tone set 1 and a pilot tone set 2 are used to represent two different sets. A pilot tone subset 11 and a pilot tone subset 12 are used to represent two different subsets of the pilot tone set 1. A pilot tone subset 21 and a pilot tone subset 22 are used to represent two different subsets of the pilot tone set 2. It is assumed that the pilot tone set 1 takes effect at a moment t1. In this case, the network device sends the pilot tone subset 11 on some downlink symbols in the first TDD frame after the pilot tone set 1 takes effect, sends the pilot tone subset 12 on some downlink symbols in the second TDD frame after the pilot tone set 1 takes effect, and so on, until a new pilot tone set takes effect. For example, in FIG. 10F, the pilot tone set is updated from the pilot tone set 1 to the pilot tone set 2. After the pilot tone set 2 takes effect, the network device sends the pilot tone subset 21 on some downlink symbols in the first TDD frame after the pilot tone set 2 takes effect, sends the pilot tone subset 22 on some downlink symbols in the second TDD frame after the pilot tone set 2 takes effect, and so on.

### Implementation 7:

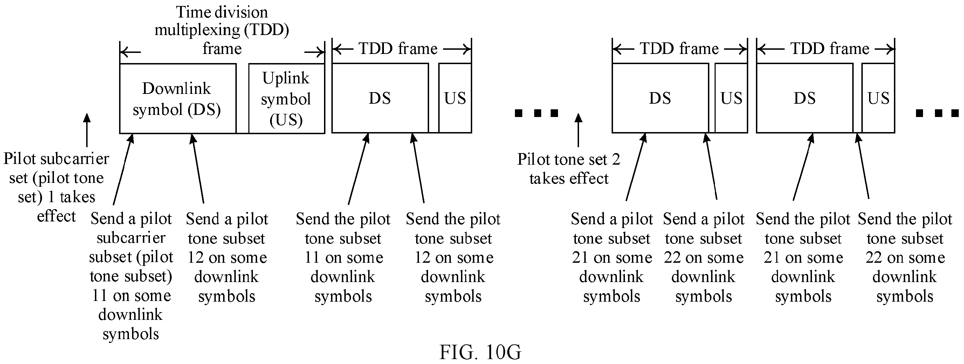

After a pilot tone set takes effect, the network device sends pilot tones on all downlink symbols, but pilot tones sent on the symbols may be different. FIG. 10G is a schematic diagram of sending a pilot tone in this case. A pilot tone set 1 is used to represent a set. A pilot tone subset 11 and a pilot tone subset 12 are used to represent two different subsets of the pilot tone set 1. It is assumed that the pilot tone set 1 takes effect at a moment 11. In this case, the network device sends the pilot tone subset 11 on some downlink symbols and pilot tone subset 12 on other downlink symbols in the first TDD frame after the pilot tone set 1 takes effect, sends the pilot tone subset 11 on some downlink symbols and pilot tone subset 12 on other downlink symbols in the second TDD frame after the pilot tone set 1 takes effect, and so on, until a new pilot tone set takes effect. In a same TDD frame, a sum of a quantity of symbols on which the pilot tone subset 11 is sent and a quantity of symbols on which the pilot tone subset 12 is sent is equal to a quantity of downlink symbols in one TDD frame.

### Implementation 8:

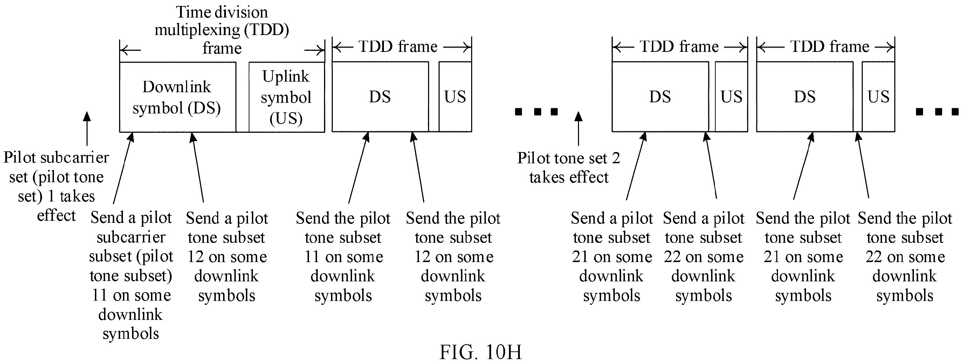

After a pilot tone set takes effect, the network device sends a pilot tone on some downlink symbols, but pilot tones sent on the symbols may be different. A difference of this implementation from implementation 7 is that a total quantity of downlink symbols on which a pilot tone is sent in one TDD frame is less than a total quantity of downlink symbols in one TDD frame. The case is shown in FIG. 10H. A pilot tone set 1 is used to represent a set. A pilot tone subset 11 and a pilot tone subset 12 are used to represent two different subsets of the pilot tone set 1. It is assumed that the pilot tone set 1 takes effect at a moment t1. In this case, the network device sends the pilot tone subset 11 on some downlink symbols and pilot tone subset 12 on other downlink symbols in the first TDD frame after the pilot tone set 1 takes effect, sends the pilot tone subset 11 on some downlink symbols and pilot tone subset 12 on other downlink symbols in the second TDD frame after the pilot tone set 1 takes effect, and so on, until a new pilot tone set takes effect. In a same TDD frame, a sum of a quantity of symbols on which the pilot tone subset 11 is sent and a quantity of symbols on which the pilot tone subset 12 is sent is less than a quantity of downlink symbols in one TDD frame.

As for that "the terminal in the showtime phase receives, on the some downlink time domain resources, the some or all pilot subcarriers included in the pilot subcarrier set sent by the network device" described in step S103, some downlink symbols received by the terminal are downlink symbols that are used by the network device to transmit the some or all pilot tones included in the pilot tone set and that include a pilot tone selected for use by the terminal. For example, the network device transmits the pilot tone on a downlink symbol 1 and a downlink symbol 2, where only the symbol 1 includes the pilot tone selected for use by the first terminal, and the symbol 2 does not include the pilot tone selected for use by the first terminal. In this case, the first terminal may receive the pilot tone only on the symbol 1, and does not receive the pilot tone on the symbol 2. Alternatively, the some downlink symbols received by the terminal are downlink symbols used by the network device to transmit the some or all pilot tones included in the pilot tone set. For example, the network device transmits the pilot tone on a downlink symbol 1 and a downlink symbol 2, where only the symbol 1 includes the pilot tone selected for use by the first terminal, and the symbol 2 does not include the pilot tone selected for use by the first terminal. In this case, the first terminal may receive the pilot tone on both the symbol 1 and the symbol 2.

By implementing the method embodiment shown in FIG. 9, it can be ensured that in a G.mgfast P2MP architecture, all terminals in the showtime phase can extract an expected pilot tone from a current downlink symbol to implement clock tracing, regardless of whether the terminals use a current TDD frame to communicate with the network device. In this way, when the terminals use the TDD frame, a transmission rate does not decrease due to asynchronization between clocks of the terminal and the network device and communication quality does not deteriorate. Optionally, after the network device sends an updated pilot tone set to all the terminals in the showtime phase, and before the network device transmits, on some or all downlink time domain resources, some or all pilot tones included in the pilot tone set, the network device receives a data tone set, a table b corresponding to the data tone set, a table b corresponding to the data tone set, an RMC tone set, a table b corresponding to the RMC tone set, and a table g corresponding to the RMC tone set that are sent by each terminal of all the terminals in the showtime phase. Subsequently, the network device sends an effective time of the pilot tone set to all the terminals in the showtime phase. For specific implementation, refer to related descriptions in the embodiments shown in FIG. 8A to FIG. 8C. Details are not described herein again.

In addition, for the foregoing case 1, after the network device sends an updated pilot tone set to the first terminal that requests to go online, and before the network device transmits, on some or all downlink time domain resources, some or all pilot tones included in the pilot tone set, the network device receives a data tone set, a table b corresponding to the data tone set, a table g corresponding to the data tone set, an RMC tone set, a table b corresponding to the RMC tone set, and a table g corresponding to the RMC tone set that are sent by the first terminal. The network device may not need to send an effective time of the pilot tone set to the first terminal, because the network device may control the first terminal to enter a showtime phase later than or at a time when the pilot tone set takes effect. In this way, after the first terminal enters the showtime phase, the pilot tone set already takes effect. For specific implementation, refer to related descriptions in the embodiment shown in FIG. 8A. Details are not described herein again. Optionally, the sending, by the network device, an effective time of the pilot tone set to all the terminals in the showtime phase may be: sending, by the network device, the effective time of the pilot tone set to all the terminals in the showtime phase by using a broadcast channel. Optionally, the sending, by the network device, the pilot tone set to all the terminals in the showtime phase may be: sending, by the network device, the pilot tone set to all the terminals in the showtime phase by using the broadcast channel.

Further, the pilot tone transmission method provided in this application may be also applied to a frequency division multiple access system. Frequency division multiple access means that the network device divides a frequency band of each symbol, and allocates one frequency subband to one terminal for use. For example, as shown in FIG. 3, the terminal 102 occupies a frequency subband FB 1, the terminal 103 occupies a frequency subband FB 2, the terminal 104 occupies a frequency subband FB 3, the terminal 105 occupies a frequency subband FB 4, and so on. The pilot tone set sent by the network device is shared by all the terminals in the showtime phase. The terminal in the showtime phase may extract these pilot tones when receiving a downlink symbol (if the network device sends the pilot tone on all downlink symbols, the terminal extracts the pilot tone on all the downlink symbols; if the network device sends the pilot tone only on some downlink symbols, the terminal extracts the pilot tone only on the some downlink symbols). In this case, for a manner in which the network device sends the pilot tone, refer to the eight implementations shown in FIG. 10A to FIG. 10H. Details are not described herein again.

Optionally, if the pilot tone transmission method provided in this application is applied to the FDMA system, each terminal occupies a different frequency band. In a case that some terminals occupy a high frequency band, because channel attenuation of the high frequency band is relatively large, it is difficult to ensure that the terminals receive, on the high frequency band, a pilot tone that meets an SNR requirement. If such a case occurs, this application provides a solution: After a terminal performs measurement on a frequency subband occupied by the terminal, and finds that SNRs of subcarriers on the frequency subband occupied by the terminal cannot meet a requirement for carrying a pilot tone, the terminal may report, to the network device, indication information indicating that the frequency subband occupied by the terminal cannot carry a pilot tone. After receiving the indication information, the network device allocates a pilot tone on a low frequency band to the terminal, and sends the pilot tone to the terminal. After receiving the pilot tone on the low frequency band, the terminal may use the pilot tone on the low frequency band to implement clock synchronization with the network device. Generally, compared with a high frequency band, a low frequency band has smaller channel attenuation and has a high SNR, and therefore can meet a requirement for carrying a pilot tone.

Optionally, when feeding back related information about a pilot tone selected for use or about a pilot tone updated for use, the terminal may feed back a sequence number of a subcarrier of the pilot tone, or may feed back indication information. For example, if the pilot tones selected for use by the terminal are 1, 2, 3, and 4, the terminal may feed back sequence numbers of the pilot tones: 1, 2, 3, and 4. In this feedback manner, sequence numbers of subcarriers of pilot tones are fed back.

Alternatively, it is assumed that the sequence numbers of the pilot tones previously fed back by the terminal are 1, 2, 3, and 4. A channel has changed, and pilot tones updated for use by the terminal are changed to 1, 2, 3, and 5. In this case, the terminal may feed back 0, 0, 0, and 1, that is, the terminal feeds back differences (offset) between the pilot tones updated for use and the pilot tones previously fed back.

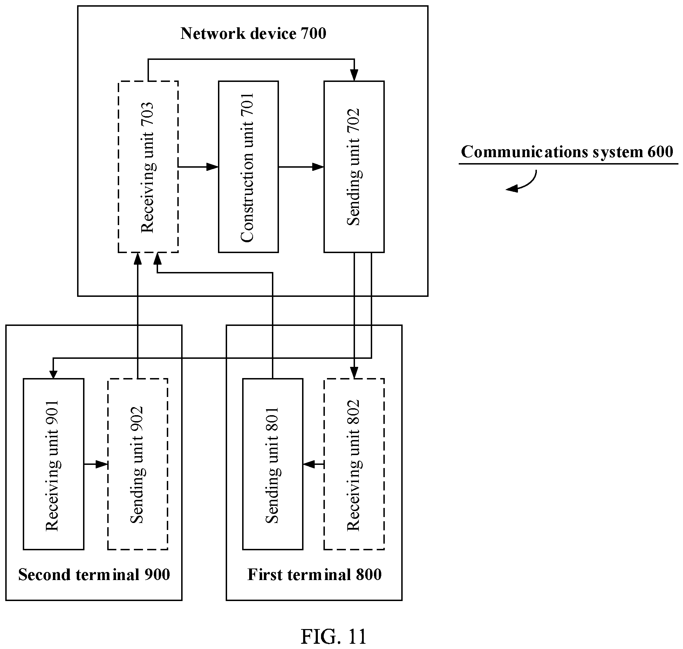

FIG. 11 shows a communications system 600 according to an embodiment of this application, where the communications system 600 includes a network device 700, a first terminal 800, and a second terminal 900. The network device 700 may be the network device in the foregoing method embodiment, and may be configured to construct a pilot subcarrier set, and send the constructed pilot subcarrier set to all terminals in a showtime phase. In addition, the network device further transmits, on a downlink time domain resource, a pilot subcarrier included in the pilot subcarrier set, so that each terminal in the showtime phase can implement clock synchronization with the network device. The first terminal 800 may be the first terminal in the foregoing method embodiment, and may trigger the network device 700 to construct the pilot subcarrier set. In addition, after entering the showtime phase, the first terminal may also receive the pilot subcarrier transmitted by the network device 700 on the downlink time domain resource, to implement clock synchronization with the network device 700. The second terminal 900 may be the second terminal in the foregoing method embodiment, and receives the pilot subcarrier transmitted by the network device 700 on the downlink time domain resource, to implement clock synchronization with the network device 700.

As shown in FIG. 11, the network device 700 includes a construction unit 701 and a sending unit 702.

The construction unit 701 is configured to construct a pilot subcarrier set, where the pilot subcarrier set includes pilot subcarriers selected for use by all terminals in a showtime phase or an initialization phase. The network device 700 is connected to a user node by using a twisted pair, the user node is connected to at least two terminals and an offline terminal, the at least two terminals comprisea terminal in the showtime phase and a terminal in the initialization phase, and the terminal in the showtime phase and the terminal in the initialization phase communicate with the network device 700 by using the twisted pair in a time division multiplexing mode or a frequency division multiplexing mode.

The sending unit 702 is configured to send the pilot subcarrier set to the terminal in the showtime phase and the terminal in the initialization phase.

The sending unit 702 is further configured to: after the pilot subcarrier set takes effect, transmit, on some or all downlink time domain resources, some or all pilot subcarriers included in the pilot subcarrier set, where the pilot subcarrier is used to carry a clock signal, and the clock signal is used by the terminal in the showtime phase to implement clock synchronization with the network device 700.

The network device 700 further includes a receiving unit 703. The receiving unit 703 is configured to: before the construction unit 701 constructs the pilot subcarrier set, receive a first request sent by the first terminal 800.

Optionally, the first request is used to indicate a pilot subcarrier that is selected for use by the first terminal after the first terminal enters the showtime phase, and the pilot subcarrier set includes a subcarrier that is selected for use by the first terminal and that is not in the pilot subcarrier set. In this case, that the construction unit 701 constructs a pilot subcarrier set specifically includes: when the first terminal requests to go online, adding a first pilot subcarrier to the pilot subcarrier set, where the first pilot subcarrier is a subcarrier that is selected for use by the first terminal and that is not in the pilot subcarrier set.

The first request is used to request to go offline, and the first pilot subcarrier set does not include a subcarrier that is used only by the first terminal and will be no longer used by the first terminal. In this case, that the construction unit 701 constructs a pilot subcarrier set specifically includes: when the first terminal requests to go offline, deleting a second pilot subcarrier from the pilot subcarrier set, where the second pilot subcarrier is a subcarrier that is used only by the first terminal and will be no longer used by the first terminal.

The first terminal is in the showtime phase, the first request is used by the first terminal to update selection of a pilot subcarrier that is used, the first pilot subcarrier set does not include the subcarrier that is used only by the first terminal and will be no longer used by the first terminal, and the pilot subcarrier set includes the subcarrier that is selected for use by the first terminal and that is not in the pilot subcarrier set. In this case, that the construction unit 701 constructs a pilot subcarrier set specifically includes: when the first terminal requests to update selection of a pilot subcarrier, deleting a third pilot subcarrier from the pilot subcarrier set, and/or adding a fourth pilot subcarrier to the pilot subcarrier set, where the third pilot subcarrier is a subcarrier that is used only by the first terminal and will be no longer used by the first terminal, and the fourth pilot subcarrier is a subcarrier that is selected for use by the first terminal in the updated selection and that is not in the pilot subcarrier set.

Optionally, the receiving unit 703 is further configured to: after the sending unit 702 sends the pilot subcarrier set to all the terminals in the showtime phase, and before the sending unit 702 transmits, on the some or all downlink time domain resources, the some or all pilot subcarriers included in the pilot subcarrier set, receive a data subcarrier set, a first information table corresponding to the data subcarrier set, a second information table corresponding to the data subcarrier set, a robustness management channel subcarrier set, a third information table corresponding to the robustness management channel subcarrier set, and a fourth information table corresponding to the robustness management channel subcarrier set that are sent by each terminal of all the terminals in the showtime phase, where the first information table is used to indicate a quantity of bits carried on each data subcarrier in the data subcarrier set, the second information table is used to indicate a power fine-tuning factor corresponding to each data subcarrier in the data subcarrier set, the third information table is used to indicate a quantity of bits carried on each robustness management channel subcarrier in the robustness management channel subcarrier set, and the fourth information table is used to indicate a power fine-tuning factor corresponding to each robustness management channel subcarrier in the robustness management channel subcarrier set.

The sending unit 702 is further configured to send an effective time of the pilot subcarrier set to all the terminals in the showtime phase.

Optionally, that the sending unit 702 is configured to send an effective time of the pilot subcarrier set to all the terminals in the showtime phase includes: sending the effective time of the pilot subcarrier set to all the terminals in the showtime phase by using a broadcast channel. Optionally, that the sending unit 702 is configured to send the pilot subcarrier set to all the terminals in the showtime phase includes: sending the pilot subcarrier set to all the terminals in the showtime phase by using the broadcast channel.

As shown in FIG. 11, the first terminal 800 may include a sending unit 801.

The sending unit 801 is configured to send a first request to the network device 700, where the first request is used to instruct the network device 700 to construct a pilot subcarrier set, where the pilot subcarrier set includes pilot subcarriers selected for use by all terminals in a showtime phase or an initialization phase. The network device 700 is connected to a user node by using a twisted pair, the user node is connected to at least two terminals and an offline terminal, the at least two terminals comprisea terminal in the showtime phase and a terminal in the initialization phase, and the terminal in the showtime phase and the terminal in the initialization phase communicate with the network device 700 by using the twisted pair in a time division multiplexing mode or a frequency division multiplexing mode.

Optionally, the first request is used to indicate a pilot subcarrier that is selected for use by the first terminal after the first terminal enters the showtime phase, and the pilot subcarrier set includes a subcarrier that is selected for use by the first terminal and that is not in the pilot subcarrier set.

Optionally, the first request is used to request to go offline, and the first pilot subcarrier set does not include a subcarrier that is used only by the first terminal and will be no longer used by the first terminal.

Optionally, the first terminal is in the showtime phase, the first request is used by the first terminal to update selection of a pilot subcarrier that is used, the first pilot subcarrier set does not include the subcarrier that is used only by the first terminal and will be no longer used by the first terminal, and the pilot subcarrier set includes the subcarrier that is selected for use by the first terminal and that is not in the pilot subcarrier set.

Optionally, the first terminal 800 further includes:
the receiving unit 802, configured to: after the sending unit 801 sends the first request to the network device and after the pilot subcarrier set takes effect, receive, on some or all downlink time domain resources, where some or all pilot subcarriers included in the pilot subcarrier set sent by the network device, the pilot subcarrier is used to carry a clock signal, and the clock signal is used by the first terminal to implement clock synchronization with the network device.

Optionally, the some downlink time domain resources include downlink time domain resources used by the network device to transmit the some or all pilot subcarriers included in the pilot subcarrier set; or the some downlink time domain resources include downlink time domain resources that are used by the network device to transmit the some or all pilot subcarriers included in the pilot subcarrier set and that include a pilot subcarrier selected for use by the first terminal.

Optionally, the receiving unit 802 is further configured to: after the sending unit 801 sends the first request to the network device, and before the receiving unit receives, on the some or all downlink time domain resources, the some or all pilot subcarriers included in the pilot subcarrier set sent by the network device, receive the pilot subcarrier set sent by the network device.

The sending unit 801 is further configured to send, to the network device, a data subcarrier set, a first information table corresponding to the data subcarrier set, a second information table corresponding to the data subcarrier set, a robustness management channel subcarrier set, a third information table corresponding to the robustness management channel subcarrier set, and a fourth information table corresponding to the robustness management channel subcarrier set, where the first information table is used to indicate a quantity of bits carried on each data subcarrier in the data subcarrier set, the second information table is used to indicate a power fine-tuning factor corresponding to each data subcarrier in the data subcarrier set, the third information table is used to indicate a quantity of bits carried on each robustness management channel subcarrier in the robustness management channel subcarrier set, and the fourth information table is used to indicate a power fine-tuning factor corresponding to each robustness management channel subcarrier in the robustness management channel subcarrier set.

The receiving unit 802 is further configured to receive an effective time of the pilot subcarrier set sent by the network device.

As shown in FIG. 11, the second terminal 900 includes a receiving unit 901.

The receiving unit 901 may be configured to receive a pilot subcarrier set sent by the network device 700, where the pilot subcarrier set includes pilot subcarriers selected for use by all terminals in a showtime phase or an initialization phase, the network device 700 is connected to a user node by using a twisted pair, the user node is connected to at least two terminals and an offline terminal, the at least two terminals comprisea terminal in the showtime phase and a terminal in the initialization phase, and the terminal in the showtime phase and the terminal in the initialization phase communicate with the network device 700 by using the twisted pair in a time division multiplexing mode or a frequency division multiplexing mode.

The receiving unit 901 is further configured to: after the pilot subcarrier set takes effect, receive, on some or all downlink time domain resources, some or all pilot subcarriers included in the pilot subcarrier set sent by the network device 700, where the pilot subcarrier is used to carry a clock signal, and the clock signal is used by the second terminal to implement clock synchronization with the network device 700.

The some downlink time domain resources are downlink time domain resources used by the network device to transmit the some or all pilot subcarriers included in the pilot subcarrier set. Alternatively, the some downlink time domain resources are downlink time domain resources that are used by the network device to transmit the some or all pilot subcarriers included in the pilot subcarrier set and that include a pilot subcarrier selected for use by the second terminal.

The second terminal 900 further includes:
a sending unit 902, configured to: after the receiving unit 901 receives the pilot subcarrier set sent by the network device, and before the receiving unit 901 receives, on the some or all downlink time domain resources, the some or all pilot subcarriers included in the pilot subcarrier set sent by the network device, send, to the network device, a data subcarrier set, a first information table corresponding to the data subcarrier set, a second information table corresponding to the data subcarrier set, a robustness management channel subcarrier set, a third information table corresponding to the robustness management channel subcarrier set, and a fourth information table corresponding to the robustness management channel subcarrier set, where the first information table is used to indicate a quantity of bits carried on each data subcarrier in the data subcarrier set, the second information table is used to indicate a power fine-tuning factor corresponding to each data subcarrier in the data subcarrier set, the third information table is used to indicate a quantity of bits carried on each robustness management channel subcarrier in the robustness management channel subcarrier set, and the fourth information table is used to indicate a power fine-tuning factor corresponding to each robustness management channel subcarrier in the robustness management channel subcarrier set.

The receiving unit 901 is further configured to receive an effective time of the pilot subcarrier set sent by the network device.

It may be understood that for specific implementation of the function units included in the network device 700, refer to related functions of the network device in the method embodiments shown in FIG. 8A, FIG. 8B, FIG. 8C, and FIG. 9. For specific implementation of the function units included in the first terminal 800, refer to related functions of the first terminal in the method embodiments shown in FIG. 8A, FIG. 8B, FIG. 8C, and FIG. 9. For specific implementation of the function units included in the second terminal 900, refer to related functions of the second terminal in the method embodiments shown in FIG. 8A, FIG. 8B, FIG. 8C, and FIG. 9. Details are not described herein again.

In addition, an embodiment of the present invention further provides a communications system. The communications system may use the P2MP network architecture 100 shown in FIG. 1, or may be the wireless communications system 600 shown in FIG. 11, where the communications system 600 may include a network device, a first terminal, and a second terminal. The network device may be the network device in the method embodiments corresponding to FIG. 8A, FIG. 8B, FIG. 8C, and FIG. 9, and the first terminal may be the first terminal in the method embodiments corresponding to FIG. 8A, FIG. 8B, FIG. 8C, and FIG. 9. The second terminal may be the second terminal in the method embodiments corresponding to FIG. 8A, FIG. 8B, FIG. 8C, and FIG. 9.

Specifically, the first terminal and the second terminal each may be the terminal 400 shown in FIG. 4, and the network device may be the network device 500 shown in FIG. 5. Alternatively, the network device may be the network device 700 shown in FIG. 11. The first terminal may be the first terminal 800 shown in FIG. 11. The second terminal may be the second terminal 900 shown in FIG. 11. For specific implementations of the network device, the first terminal, and the second terminal, refer to the method embodiments corresponding to FIG. 8A, FIG. 8B, FIG. 8C, and FIG. 9. Details are not described herein again.

For example, the first terminal is the terminal shown in FIG. 4. The processor 401 of the terminal is configured to invoke an instruction stored in the memory 402 to control the transmitter 404 to perform sending and control the receiver 405 to perform receiving. The transmitter 404 is configured to support the terminal in performing a data and/or signaling transmitting process in FIG. 8A, FIG. 8B, FIG. 8C, and FIG. 9. The receiver 405 is configured to support the terminal in performing a data and/or signaling receiving process in FIG. 8A, FIG. 8B, FIG. 8C, and FIG. 9. The memory 402 is configured to store program code and data of the terminal.

For example, the second terminal is the terminal shown in FIG. 4. The processor 401 of the terminal is configured to invoke an instruction stored in the memory 402 to control the transmitter 404 to perform sending and control the receiver 405 to perform receiving. The transmitter 404 is configured to support the terminal in performing a data and/or signaling transmitting process in FIG. 8A, FIG. 8B, FIG. 8C, and FIG. 9. The receiver 405 is configured to support the terminal in performing a data and/or signaling receiving process in FIG. 8A, FIG. 8B, FIG. 8C, and FIG. 9. The memory 402 is configured to store program code and data of the terminal.

For example, the network device is the network device shown in FIG. 5. The network device processor 501 is configured to control the transmitter 504 to perform sending and control the receiver 505 to perform receiving. The transmitter 504 is configured to support the network device in performing a data and/or signaling transmitting process in FIG. 8A, FIG. 8B, FIG. 8C, and FIG. 9. The receiver 505 is configured to support the network device in performing a data and/or signaling receiving process in FIG. 8A, FIG. 8B, FIG. 8C, and FIG. 9. The memory 502 is configured to store program code and data of the network device.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of the present invention are all or partially generated. The computer may be a general-purpose computer, a dedicated computer, a computer network, or another programmable apparatus. The computer instruction may be stored in a computer-readable storage medium, or transmitted from one computer-readable storage medium to another computer-readable storage medium, for example, the computer instruction may be transmitted from one website, computer, server, or data center to another website, computer, server, or data center in a wired (for example, a coaxial cable, an optical fiber, or a digital subscriber line (DSL)) or wireless (for example, infrared, wireless, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like.

A person of ordinary skill in the art may understand that all or some of the procedures of the methods in the foregoing embodiments may be implemented by a computer program instructing relevant hardware. The program may be stored in a computer-readable storage medium. When the program is run, the procedures in the foregoing method embodiments are performed. The foregoing storage medium includes: any medium that can store program code, such as a read-only memory (ROM), a random access memory (RAM), a magnetic disk, or an optical disc.

## Claims

1. A pilot information transmission method, comprising:
constructing (S101), by a network device, a pilot subcarrier set, wherein the pilot subcarrier set comprises pilot subcarriers selected for use by all terminals in a showtime phase or an initialization phase, the network device is connected to a user node by using a twisted pair, the user node is connected to at least two terminals, the at least two terminals comprise a terminal in the showtime phase and a terminal in the initialization phase, and the terminal in the showtime phase and the terminal in the initialization phase communicate with the network device by using the twisted pair in a time division multiplexing mode or a frequency division multiplexing mode in a Point-to-Multipoint, P2MP, network;
sending (S102), by the network device, the pilot subcarrier set to the terminals in the showtime phase and the terminals in the initialization phase; and
after the pilot subcarrier set takes effect, transmitting (S103), by the network device on some or all downlink time domain resources, some or all pilot subcarriers comprised in the pilot subcarrier set, wherein the pilot subcarrier is used to carry a clock signal, and the clock signal is used by the terminal in the showtime phase to implement clock synchronization with the network device;
wherein the constructing (S101), by a network device, a pilot subcarrier set comprises:
when a first terminal requests to go online, adding, by the network device, a first pilot subcarrier to the pilot subcarrier set, wherein the first pilot subcarrier is a subcarrier that is selected for use by the first terminal and that is not in the pilot subcarrier set;
when a first terminal requests to go offline, deleting, by the network device, a second pilot subcarrier from the pilot subcarrier set, wherein the second pilot subcarrier is a subcarrier that is used only by the first terminal and will be no longer used by the first terminal; or
when a first terminal requests to update selection of a pilot subcarrier, deleting, by the network device, a third pilot subcarrier from the pilot subcarrier set, and/or adding, by the network device, a fourth pilot subcarrier to the pilot subcarrier set, wherein the third pilot subcarrier is a subcarrier that is used only by the first terminal and will be no longer used by the first terminal, and the fourth pilot subcarrier is a subcarrier that is selected for use by the first terminal in the updated selection and that is not in the pilot subcarrier set.

2. The method according to claim 1, wherein after the sending (S102), by the network device, the pilot subcarrier set to all the terminals in the showtime phase and before the transmitting (S103), by the network device on some or all downlink time domain resources, some or all pilot subcarriers comprised in the pilot subcarrier set, the method further comprises:
receiving, by the network device, a data subcarrier set, a first information table corresponding to the data subcarrier set, a second information table corresponding to the data subcarrier set, a robustness management channel subcarrier set, a third information table corresponding to the robustness management channel subcarrier set, and a fourth information table corresponding to the robustness management channel subcarrier set that are sent by each terminal of all the terminals in the showtime phase, wherein the first information table is used to indicate a quantity of bits carried on each data subcarrier in the data subcarrier set, the second information table is used to indicate a power fine-tuning factor corresponding to each data subcarrier in the data subcarrier set, the third information table is used to indicate a quantity of bits carried on each robustness management channel subcarrier in the robustness management channel subcarrier set, and the fourth information table is used to indicate a power fine-tuning factor corresponding to each robustness management channel subcarrier in the robustness management channel subcarrier set; and
sending, by the network device, an effective time of the pilot subcarrier set to all the terminals in the showtime phase.

3. The method according to claim 2, wherein the sending, by the network device, an effective time of the pilot subcarrier set to all the terminals in the showtime phase comprises:
sending, by the network device, the effective time of the pilot subcarrier set to all the terminals in the showtime phase by using a broadcast channel.

4. The method according to any one of claims 1 to 3, wherein the sending (S102), by the network device, the pilot subcarrier set to all the terminals in the showtime phase comprises:
sending, by the network device, the pilot subcarrier set to all the terminals in the showtime phase by using the broadcast channel.

5. A pilot information transmission method, comprising:
receiving, by a second terminal, a pilot subcarrier set sent by a network device, wherein the pilot subcarrier set comprises pilot subcarriers selected for use by all terminals in a showtime phase or an initialization phase, the network device is connected to a user node by using a twisted pair, the user node is connected to at least two terminals, the at least two terminals comprise a terminal in the showtime phase and a terminal in the initialization phase, and the terminal in the showtime phase and the terminal in the initialization phase communicate with the network device by using the twisted pair in a time division multiplexing mode or a frequency division multiplexing mode in a Point-to-Multipoint, P2MP, network;
sending, by the second terminal to the network device, a data subcarrier set, a first information table corresponding to the data subcarrier set, a second information table corresponding to the data subcarrier set, a robustness management channel subcarrier set, a third information table corresponding to the robustness management channel subcarrier set, and a fourth information table corresponding to the robustness management channel subcarrier set, wherein the first information table is used to indicate a quantity of bits carried on each data subcarrier in the data subcarrier set, the second information table is used to indicate a power fine-tuning factor corresponding to each data subcarrier in the data subcarrier set, the third information table is used to indicate a quantity of bits carried on each robustness management channel subcarrier in the robustness management channel subcarrier set, and the fourth information table is used to indicate a power fine-tuning factor corresponding to each robustness management channel subcarrier in the robustness management channel subcarrier set;
receiving, by the second terminal, an effective time of the pilot subcarrier set sent by the network device; and
after the pilot subcarrier set takes effect, receiving, by the second terminal on some or all downlink time domain resources, some or all pilot subcarriers comprised in the pilot subcarrier set sent by the network device, wherein the pilot subcarrier is used to carry a clock signal, and the clock signal is used by the second terminal in the showtime phase to implement clock synchronization with the network device.

6. The method according to claim 5, wherein the some downlink time domain resources are downlink time domain resources used by the network device to transmit the some or all pilot subcarriers comprised in the pilot subcarrier set; or the some downlink time domain resources are downlink time domain resources that are used by the network device to transmit the some or all pilot subcarriers comprised in the pilot subcarrier set and that comprise a pilot subcarrier selected for use by the second terminal.

7. A network device, comprising:
a construction unit (701), configured to construct a pilot subcarrier set, wherein the pilot subcarrier set comprises pilot subcarriers selected for use by all terminals in a showtime phase or an initialization phase, the network device is connected to a user node by using a twisted pair, the user node is connected to at least two terminals, the at least two terminals comprise a terminal in the showtime phase and a terminal in the initialization phase, and the terminal in the showtime phase and the terminal in the initialization phase communicate with the network device by using the twisted pair in a time division multiplexing mode or a frequency division multiplexing mode in a Point-to-Multipoint, P2MP, network; and
a sending unit (702), configured to send the pilot subcarrier set to the terminal in the showtime phase and the terminal in the initialization phase, wherein
the sending unit is further configured to: after the pilot subcarrier set takes effect, transmit, on some or all downlink time domain resources, some or all pilot subcarriers comprised in the pilot subcarrier set, wherein the pilot subcarrier is used to carry a clock signal, and the clock signal is used by the terminal in the showtime phase to implement clock synchronization with the network device;
wherein the construction unit is specifically configured to:
when a first terminal requests to go online, add a first pilot subcarrier to the pilot subcarrier set, wherein the first pilot subcarrier is a subcarrier that is selected for use by the first terminal and that is not in the pilot subcarrier set;
when a first terminal requests to go offline, delete a second pilot subcarrier from the pilot subcarrier set, wherein the second pilot subcarrier is a subcarrier that is used only by the first terminal and will be no longer used by the first terminal; or
when a first terminal requests to update selection of a pilot subcarrier, delete a third pilot subcarrier from the pilot subcarrier set, and/or add a fourth pilot subcarrier to the pilot subcarrier set, wherein the third pilot subcarrier is a subcarrier that is used only by the first terminal and will be no longer used by the first terminal, and the fourth pilot subcarrier is a subcarrier that is selected for use by the first terminal in the updated selection and that is not in the pilot subcarrier set.

8. The network device according to claim 7, wherein the network device further comprises:
a receiving unit (703), configured to: after the sending unit sends the pilot subcarrier set to all the terminals in the showtime phase, and before the sending unit transmits, on the some or all downlink time domain resources, the some or all pilot subcarriers comprised in the pilot subcarrier set, receive a data subcarrier set, a first information table corresponding to the data subcarrier set, a second information table corresponding to the data subcarrier set, a robustness management channel subcarrier set, a third information table corresponding to the robustness management channel subcarrier set, and a fourth information table corresponding to the robustness management channel subcarrier set that are sent by each terminal of all the terminals in the showtime phase, wherein the first information table is used to indicate a quantity of bits carried on each data subcarrier in the data subcarrier set, the second information table is used to indicate a power fine-tuning factor corresponding to each data subcarrier in the data subcarrier set, the third information table is used to indicate a quantity of bits carried on each robustness management channel subcarrier in the robustness management channel subcarrier set, and the fourth information table is used to indicate a power fine-tuning factor corresponding to each robustness management channel subcarrier in the robustness management channel subcarrier set, wherein
the sending unit (702) is further configured to send an effective time of the pilot subcarrier set to all the terminals in the showtime phase.

9. The network device according to claim 8, wherein that the sending unit (702) is configured to send an effective time of the pilot subcarrier set to all the terminals in the showtime phase comprises:
the sending unit (702) is configured to send the effective time of the pilot subcarrier set to all the terminals in the showtime phase by using a broadcast channel.

10. The network device according to any one of claims 7 to 9, wherein that the sending unit (702) is configured to send the pilot subcarrier set to all the terminals in the showtime phase comprises:
the sending unit (702) is configured to send the pilot subcarrier set to all the terminals in the showtime phase by using the broadcast channel.

11. A terminal, wherein the terminal is a second terminal, and the second terminal comprises:
a receiving unit (901), configured to receive a pilot subcarrier set sent by a network device, wherein the pilot subcarrier set comprises pilot subcarriers selected for use by all terminals in a showtime phase or an initialization phase, the network device is connected to a user node by using a twisted pair, the user node is connected to at least two terminals, the at least two terminals comprise a terminal in the showtime phase and a terminal in the initialization phase, and the terminal in the showtime phase and the terminal in the initialization phase communicate with the network device by using the twisted pair in a time division multiplexing mode or a frequency division multiplexing mode in a Point-to-Multipoint, P2MP, network;
a sending unit (902), configured to: after the receiving unit receives the pilot subcarrier set sent by the network device, and before the receiving unit receives, on the some or all downlink time domain resources, the some or all pilot subcarriers comprised in the pilot subcarrier set sent by the network device, send, to the network device, a data subcarrier set, a first information table corresponding to the data subcarrier set, a second information table corresponding to the data subcarrier set, a robustness management channel subcarrier set, a third information table corresponding to the robustness management channel subcarrier set, and a fourth information table corresponding to the robustness management channel subcarrier set, wherein the first information table is used to indicate a quantity of bits carried on each data subcarrier in the data subcarrier set, the second information table is used to indicate a power fine-tuning factor corresponding to each data subcarrier in the data subcarrier set, the third information table is used to indicate a quantity of bits carried on each robustness management channel subcarrier in the robustness management channel subcarrier set, and the fourth information table is used to indicate a power fine-tuning factor corresponding to each robustness management channel subcarrier in the robustness management channel subcarrier set, wherein
the receiving unit (901) is further configured to: receive an effective time of the pilot subcarrier set sent by the network device; and, after the pilot subcarrier set takes effect, receive, on some or all downlink time domain resources, some or all pilot subcarriers comprised in the pilot subcarrier set sent by the network device, wherein the pilot subcarrier is used to carry a clock signal, and the clock signal is used by the second terminal in the showtime phase to implement clock synchronization with the network device.

12. The terminal according to claim 11, wherein the some downlink time domain resources are downlink time domain resources used by the network device to transmit the some or all pilot subcarriers comprised in the pilot subcarrier set; or the some downlink time domain resources are downlink time domain resources that are used by the network device to transmit the some or all pilot subcarriers comprised in the pilot subcarrier set and that comprise a pilot subcarrier selected for use by the second terminal.

## Patentansprüche

1. Pilotinformationsübertragungsverfahren, umfassend:
Konstruieren (S101), durch eine Netzwerkvorrichtung, eines Pilotunterträgersatzes, wobei der Pilotunterträgersatz Pilotunterträger umfasst, die zur Verwendung durch alle Endgeräte in einer Showtime-Phase oder einer Initialisierungsphase ausgewählt sind, wobei die Netzwerkvorrichtung durch Verwenden eines Twisted Pair mit einem Benutzerknoten verbunden ist, wobei der Benutzerknoten mit mindestens zwei Endgeräten verbunden ist, wobei die mindestens zwei Endgeräte ein Endgerät in der Showtime-Phase und ein Endgerät in der Initialisierungsphase umfassen, und wobei das Endgerät in der Showtime-Phase und das Endgerät in der Initialisierungsphase mit der Netzwerkvorrichtung durch Verwenden des Twisted Pair in einem Zeitmultiplexmodus oder einem Frequenzmultiplexmodus in einem Punkt-zu-Mehrpunkt-Netzwerk, P2MP-Netzwerk, kommunizieren;
Senden (S102), durch die Netzwerkvorrichtung, des Pilotunterträgersatzes an die Endgeräte in der Showtime-Phase und an die Endgeräte in der Initialisierungsphase; und
nachdem der Pilotunterträgersatz wirksam geworden ist, Übertragen (S103), durch die Netzwerkvorrichtung auf einigen oder allen Downlink-Zeitdomänenressourcen, einiger oder aller Pilotunterträger, die in dem Pilotunterträgersatz enthalten sind, wobei der Pilotunterträger verwendet wird, um ein Taktsignal zu tragen, und das Taktsignal durch das Endgerät in der Showtime-Phase verwendet wird, um eine Taktsynchronisation mit der Netzwerkvorrichtung zu implementieren;
wobei das Konstruieren (S101), durch eine Netzwerkvorrichtung, eines Pilotunterträgersatzes umfasst:
wenn ein erstes Endgerät anfordert, online zu gehen, Hinzufügen, durch die Netzwerkvorrichtung, eines ersten Pilotunterträgers zu dem Pilotunterträgersatz, wobei der erste Pilotunterträger ein Unterträger ist, der zur Verwendung durch das erste Endgerät ausgewählt ist und sich nicht in dem Pilotunterträgersatz befindet;
wenn ein erstes Endgerät anfordert, offline zu gehen, Löschen, durch die Netzwerkvorrichtung, eines zweiten Pilotunterträgers aus dem Pilotunterträgersatz, wobei der zweite Pilotunterträger ein Unterträger ist, der nur durch das erste Endgerät verwendet wird und nicht länger durch das erste Endgerät verwendet wird; oder
wenn ein erstes Endgerät anfordert, die Auswahl eines Pilotunterträgers zu aktualisieren, Löschen, durch die Netzwerkvorrichtung, eines dritten Pilotunterträgers aus dem Pilotunterträgersatz und/oder Hinzufügen, durch die Netzwerkvorrichtung, eines vierten Pilotunterträgers zu dem Pilotunterträgersatz, wobei der dritte Pilotunterträger ein Unterträger ist, der nur durch das erste Endgerät verwendet wird und nicht länger durch das erste Endgerät verwendet wird, und der vierte Pilotunterträger ein Unterträger ist, der zur Verwendung durch das erste Endgerät in der aktualisierten Auswahl ausgewählt ist, und das sich nicht in dem Pilotunterträgersatz befindet.

2. Verfahren nach Anspruch 1, wobei nach dem Senden (S102), durch die Netzwerkvorrichtung, des Pilotunterträgersatzes an alle die Endgeräte in der Showtime-Phase und vor dem Übertragen (S103), durch die Netzwerkvorrichtung auf einigen oder allen Downlink-Zeitdomänenressourcen, von einigen oder allen Pilotunterträgern, die in dem Pilotunterträgersatz enthalten sind, das Verfahren ferner umfasst:
Empfangen, durch die Netzwerkvorrichtung, eines Datenunterträgersatzes, einer ersten Informationstabelle, die dem Datenunterträgersatz entspricht, einer zweiten Informationstabelle, die dem Datenunterträgersatz entspricht, eines Robustheitsverwaltungskanalunterträgersatzes, einer dritten Informationstabelle, die dem Robustheitsverwaltungskanalunterträgersatz entspricht, und einer vierten Informationstabelle, die dem Robustheitsverwaltungskanalunterträgersatz entspricht, die durch jedes Endgerät aller der Endgeräte in der Showtime-Phase gesendet werden, wobei die erste Informationstabelle verwendet wird, um eine Anzahl von Bits anzuzeigen, die auf jedem Datenunterträger in dem Datenunterträgersatz getragen wird, die zweite Informationstabelle verwendet wird, um einen Leistungsfeinabstimmungsfaktor anzuzeigen, der jedem Datenunterträger in dem Datenunterträgersatz entspricht, die dritte Informationstabelle verwendet wird, um eine Anzahl von Bits anzuzeigen, die auf jedem Robustheitsverwaltungskanalunterträger in dem Robustheitsverwaltungskanalunterträgersatz getragen wird, und die vierte Informationstabelle verwendet wird, um einen Leistungsfeinabstimmungsfaktor anzuzeigen, der jedem Robustheitsverwaltungskanalunterträger in dem Robustheitsverwaltungskanalunterträgersatz entspricht; und
Senden, durch die Netzwerkvorrichtung, einer effektiven Zeit des Pilotunterträgersatzes an alle die Endgeräte in der Showtime-Phase.

3. Verfahren nach Anspruch 2, wobei das Senden, durch die Netzwerkvorrichtung, einer effektiven Zeit des Pilotunterträgersatzes an alle die Endgeräte in der Showtime-Phase umfasst:
Senden, durch die Netzwerkvorrichtung, der effektiven Zeit des Pilotunterträgersatzes an alle die Endgeräte in der Showtime-Phase durch Verwenden eines Broadcast-Kanals.

4. Verfahren nach einem der Ansprüche 1 bis 3, wobei das Senden (S102), durch die Netzwerkvorrichtung, des Pilotunterträgersatzes an alle die Endgeräte in der Showtime-Phase umfasst:
Senden, durch die Netzwerkvorrichtung, des Pilotunterträgersatzes, an alle die Endgeräte in der Showtime-Phase durch Verwenden des Broadcast-Kanals.

5. Pilotinformationsübertragungsverfahren, umfassend:
Empfangen, durch ein zweites Endgerät, eines Pilotunterträgersatzes, der durch eine Netzwerkvorrichtung gesendet wird, wobei der Pilotunterträgersatz Pilotunterträger umfasst, die zur Verwendung durch alle Endgeräte in einer Showtime-Phase oder einer Initialisierungsphase ausgewählt sind, wobei die Netzwerkvorrichtung durch Verwenden eines Twisted Pair mit einem Benutzerknoten verbunden ist, wobei der Benutzerknoten mit mindestens zwei Endgeräten verbunden ist, wobei die mindestens zwei Endgeräte ein Endgerät in der Showtime-Phase und ein Endgerät in der Initialisierungsphase umfassen, und wobei das Endgerät in der Showtime-Phase und das Endgerät in der Initialisierungsphase mit der Netzwerkvorrichtung durch Verwenden des Twisted Pair in einem Zeitmultiplexmodus oder einem Frequenzmultiplexmodus in einem Punkt-zu-Mehrpunkt-Netzwerk, P2MP-Netzwerk, kommunizieren;
Senden, durch das zweite Endgerät an die Netzwerkvorrichtung, eines Datenunterträgersatzes, einer ersten Informationstabelle, die dem Datenunterträgersatz entspricht, einer zweiten Informationstabelle, die dem Datenunterträgersatz entspricht, eines Robustheitsverwaltungskanalunterträgersatzes, einer dritten Informationstabelle, die dem Robustheitsverwaltungskanalunterträgersatz entspricht, und einer vierten Informationstabelle, die dem Robustheitsverwaltungskanalunterträgersatz entspricht, wobei die erste Informationstabelle verwendet wird, um eine Anzahl von Bits anzuzeigen, die auf jedem Datenunterträger in dem Datenunterträgersatz getragen wird, die zweite Informationstabelle verwendet wird, um einen Leistungsfeinabstimmungsfaktor anzuzeigen, der jedem Datenunterträger in dem Datenunterträgersatz entspricht, die dritte Informationstabelle verwendet wird, um eine Anzahl von Bits anzuzeigen, die auf jedem Robustheitsverwaltungskanalunterträger in dem Robustheitsverwaltungskanalunterträgersatz getragen wird, und die vierte Informationstabelle verwendet wird, um einen Leistungsfeinabstimmungsfaktor anzuzeigen, der jedem Robustheitsverwaltungskanalunterträger in dem Robustheitsverwaltungskanalunterträgersatz entspricht;
Empfangen, durch das zweite Endgerät, einer effektiven Zeit des Pilotunterträgersatzes, der durch die Netzwerkvorrichtung gesendet wird; und
nachdem der Pilotunterträgersatz wirksam geworden ist, Empfangen, durch das zweite Endgerät auf einigen oder allen Downlink-Zeitdomänenressourcen, einiger oder aller Pilotunterträger, die in dem Pilotunterträgersatz enthalten sind, der durch die Netzwerkvorrichtung gesendet wird, wobei der Pilotunterträger verwendet wird, um ein Taktsignal zu tragen, und das Taktsignal durch das zweite Endgerät in der Showtime-Phase verwendet wird, um eine Taktsynchronisation mit der Netzwerkvorrichtung zu implementieren.

6. Verfahren nach Anspruch 5, wobei die einigen Downlink-Zeitdomänenressourcen Downlink-Zeitdomänenressourcen sind, die durch die Netzwerkvorrichtung verwendet werden, um die einigen oder alle Pilotunterträger zu übertragen, die in dem Pilotunterträgersatz enthalten sind; oder die einigen Downlink-Zeitdomänenressourcen Downlink-Zeitdomänenressourcen sind, die durch die Netzwerkvorrichtung verwendet werden, um die einigen oder alle Pilotunterträger zu übertragen, die in dem Pilotunterträgersatz enthalten sind, und die einen Pilotunterträger umfassen, der zur Verwendung durch das zweite Endgerät ausgewählt ist.

7. Netzwerkvorrichtung, umfassend:
eine Konstruktionseinheit (701), die konfiguriert ist, um einen Pilotunterträgersatz zu konstruieren, wobei der Pilotunterträgersatz Pilotunterträger umfasst, die zur Verwendung durch alle Endgeräte in einer Showtime-Phase oder einer Initialisierungsphase ausgewählt sind, wobei die Netzwerkvorrichtung durch Verwenden eines Twisted Pair mit einem Benutzerknoten verbunden ist, wobei der Benutzerknoten mit mindestens zwei Endgeräten verbunden ist, wobei die mindestens zwei Endgeräte ein Endgerät in der Showtime-Phase und ein Endgerät in der Initialisierungsphase umfassen, und wobei das Endgerät in der Showtime-Phase und das Endgerät in der Initialisierungsphase mit der Netzwerkvorrichtung durch Verwenden des Twisted Pair in einem Zeitmultiplexmodus oder einem Frequenzmultiplexmodus in einem Punkt-zu-Mehrpunkt-Netzwerk, P2MP-Netzwerk, kommunizieren; und
eine Sendeeinheit (702), die konfiguriert ist, um den Pilotunterträgersatz an das Endgerät in der Showtime-Phase und an das Endgerät in der Initialisierungsphase zu senden, wobei
die Sendeeinheit ferner konfiguriert ist zum: nachdem der Pilotunterträgersatz wirksam geworden ist, Übertragen, auf einigen oder allen Downlink-Zeitdomänenressourcen, einiger oder aller Pilotunterträger, die in dem Pilotunterträgersatz enthalten sind, wobei der Pilotunterträger verwendet wird, um ein Taktsignal zu tragen, und das Taktsignal durch das Endgerät in der Showtime-Phase verwendet wird, um eine Taktsynchronisation mit der Netzwerkvorrichtung zu implementieren;
wobei die Konstruktionseinheit speziell für Folgendes konfiguriert ist:
wenn ein erstes Endgerät anfordert, online zu gehen, Hinzufügen eines ersten Pilotunterträgers zu dem Pilotunterträgersatz, wobei der erste Pilotunterträger ein Unterträger ist, der zur Verwendung durch das erste Endgerät ausgewählt ist und sich nicht in dem Pilotunterträgersatz befindet;
wenn ein erstes Endgerät anfordert, offline zu gehen, Löschen eines zweiten Pilotunterträgers aus dem Pilotunterträgersatz, wobei der zweite Pilotunterträger ein Unterträger ist, der nur durch das erste Endgerät verwendet wird und nicht länger durch das erste Endgerät verwendet wird; oder
wenn ein erstes Endgerät anfordert, die Auswahl eines Pilotunterträgers zu aktualisieren, Löschen eines dritten Pilotunterträgers aus dem Pilotunterträgersatz und/oder Hinzufügen eines vierten Pilotunterträgers zu dem Pilotunterträgersatz, wobei der dritte Pilotunterträger ein Unterträger ist, der nur durch das erste Endgerät verwendet wird und nicht länger durch das erste Endgerät verwendet wird, und der vierte Pilotunterträger ein Unterträger ist, der zur Verwendung durch das erste Endgerät in der aktualisierten Auswahl ausgewählt ist, und der sich nicht in dem Pilotunterträgersatz befindet.

8. Netzwerkvorrichtung nach Anspruch 7, wobei die Netzwerkvorrichtung ferner umfasst:
eine Empfangseinheit (703), die konfiguriert ist zum: nachdem die Sendeeinheit den Pilotunterträger an alle die Endgeräte in der Showtime-Phase gesendet hat, und bevor die Sendeeinheit auf den einigen oder allen Downlink-Zeitdomänenressourcen die einigen oder alle Pilotunterträger überträgt, die in dem Pilotunterträgersatz enthalten sind, Empfangen eines Datenunterträgersatzes, einer ersten Informationstabelle, die dem Datenunterträgersatz entspricht, einer zweiten Informationstabelle, die dem Datenunterträgersatz entspricht, eines Robustheitsverwaltungskanalunterträgersatzes, einer dritten Informationstabelle, die dem Robustheitsverwaltungskanalunterträgersatz entspricht, und einer vierten Informationstabelle, die dem Robustheitsverwaltungskanalunterträgersatz entspricht, die durch jedes Endgerät aller der Endgeräte in der Showtime-Phase gesendet werden, wobei die erste Informationstabelle verwendet wird, um eine Anzahl von Bits anzuzeigen, die auf jedem Datenunterträger in dem Datenunterträgersatz getragen wird, die zweite Informationstabelle verwendet wird, um einen Leistungsfeinabstimmungsfaktor anzuzeigen, der jedem Datenunterträger in dem Datenunterträgersatz entspricht, die dritte Informationstabelle verwendet wird, um eine Anzahl von Bits anzuzeigen, die auf jedem Robustheitsverwaltungskanalunterträger in dem Robustheitsverwaltungskanalunterträgersatz getragen wird, und die vierte Informationstabelle verwendet wird, um einen Leistungsfeinabstimmungsfaktor anzuzeigen, der jedem Robustheitsverwaltungskanalunterträger in dem Robustheitsverwaltungskanalunterträgersatz entspricht, wobei
die Sendeeinheit (702) ferner konfiguriert ist, um eine effektive Zeit des Pilotunterträgersatzes an alle die Endgeräte in der Showtime-Phase zu senden.

9. Netzwerkvorrichtung nach Anspruch 8, wobei, dass die Sendeeinheit (702) konfiguriert ist, um eine effektive Zeit des Pilotunterträgersatzes an alle die Endgeräte in der Showtime-Phase zu senden, umfasst:
dass die Sendeeinheit (702) konfiguriert ist, um die effektive Zeit des Pilotunterträgersatzes an alle die Endgeräte in der Showtime-Phase durch Verwenden eines Broadcast-Kanals zu senden.

10. Netzwerkvorrichtung nach einem der Ansprüche 7 bis 9, wobei, dass die Sendeeinheit (702) konfiguriert ist, um den Pilotunterträgersatz an alle die Endgeräte in der Showtime-Phase zu senden, umfasst:
dass die Sendeeinheit (702) konfiguriert ist, um den Pilotunterträgersatz an alle die Endgeräte in der Showtime-Phase durch Verwenden des Broadcast-Kanals zu senden.

11. Endgerät, wobei das Endgerät ein zweites Endgerät ist und das zweite Endgerät umfasst:
eine Empfangseinheit (901), die konfiguriert ist, um einen Pilotunterträgersatz zu empfangen, der durch eine Netzwerkvorrichtung gesendet wird, wobei der Pilotunterträgersatz Pilotunterträger umfasst, die zur Verwendung durch alle Endgeräte in einer Showtime-Phase oder einer Initialisierungsphase ausgewählt sind, wobei die Netzwerkvorrichtung durch Verwenden eines Twisted Pair mit einem Benutzerknoten verbunden ist, wobei der Benutzerknoten mit mindestens zwei Endgeräten verbunden ist, wobei die mindestens zwei Endgeräte ein Endgerät in der Showtime-Phase und ein Endgerät in der Initialisierungsphase umfassen, und wobei das Endgerät in der Showtime-Phase und das Endgerät in der Initialisierungsphase mit der Netzwerkvorrichtung durch Verwenden des Twisted Pair in einem Zeitmultiplexmodus oder einem Frequenzmultiplexmodus in einem Punkt-zu-Mehrpunkt-Netzwerk, P2MP-Netzwerk, kommunizieren;
eine Sendeeinheit (902), die konfiguriert ist zum: nachdem die Empfangseinheit den Pilotunterträgersatz empfangen hat, der durch die Netzwerkvorrichtung gesendet wird, und bevor die Empfangseinheit, auf einigen oder allen Downlink-Zeitdomänenressourcen, die einigen oder alle Pilotunterträger empfängt, die in dem Pilotunterträgersatz enthalten sind, die durch die Netzwerkvorrichtung gesendet werden, Senden, einer ersten Informationstabelle, die dem Datenunterträgersatz entspricht, einer zweiten Informationstabelle, die dem Datenunterträgersatz entspricht, eines Robustheitsverwaltungskanalunterträgersatzes, einer dritten Informationstabelle, die dem Robustheitsverwaltungskanalunterträgersatz entspricht, und einer vierten Informationstabelle, die dem Robustheitsverwaltungskanalunterträgersatz entspricht, wobei die erste Informationstabelle verwendet wird, um eine Anzahl von Bits anzuzeigen, die auf jedem Datenunterträger in dem Datenunterträgersatz getragen wird, die zweite Informationstabelle verwendet wird, um einen Leistungsfeinabstimmungsfaktor anzuzeigen, der jedem Datenunterträger in dem Datenunterträgersatz entspricht, die dritte Informationstabelle verwendet wird, um eine Anzahl von Bits anzuzeigen, die auf jedem Robustheitsverwaltungskanalunterträger in dem Robustheitsverwaltungskanalunterträgersatz getragen wird, und die vierte Informationstabelle verwendet wird, um einen Leistungsfeinabstimmungsfaktor anzuzeigen, der jedem Robustheitsverwaltungskanalunterträger in dem Robustheitsverwaltungskanalunterträgersatz entspricht, wobei
die Empfangseinheit (901) ferner konfiguriert ist zum: Empfangen einer effektiven Zeit des Pilotunterträgersatzes, der durch die Netzwerkvorrichtung gesendet wird; und, nachdem der Pilotunterträgersatz wirksam geworden ist, Empfangen, auf einigen oder allen Downlink-Zeitdomänenressourcen, einiger oder aller Pilot-Unterträger, die in dem Pilotunterträgersatz enthalten sind, der durch die Netzwerkvorrichtung gesendet wird, wobei der Pilotunterträger verwendet wird, um ein Taktsignal zu tragen, und das Taktsignal durch das zweite Endgerät in der Showtime-Phase verwendet wird, um eine Taktsynchronisation mit der Netzwerkvorrichtung zu implementieren.

12. Endgerät nach Anspruch 11, wobei die einigen Downlink-Zeitdomänenressourcen Downlink-Zeitdomänenressourcen sind, die durch die Netzwerkvorrichtung verwendet werden, um die einigen oder alle Pilotunterträger zu übertragen, die in dem Pilotunterträgersatz enthalten sind; oder die einigen Downlink-Zeitdomänenressourcen Downlink-Zeitdomänenressourcen sind, die durch die Netzwerkvorrichtung verwendet werden, um die einigen oder alle Pilotunterträger, die in dem Pilotunterträgersatz enthalten sind, zu übertragen und die einen Pilotunterträger umfassen, der zur Verwendung durch das zweite Endgerät ausgewählt ist.

## Revendications

1. Procédé de transmission d'informations de pilote, comprenant :
la construction (S101), par un dispositif de réseau, d'un ensemble de sous-porteuses pilotes, l'ensemble de sous-porteuses pilotes comprenant des sous-porteuses pilotes sélectionnées pour être utilisées par tous les terminaux dans une phase d'exposition ou une phase d'initialisation, le dispositif de réseau étant connecté à un noeud utilisateur en utilisant une paire torsadée, le noeud utilisateur est connecté à au moins deux terminaux, les au moins deux terminaux comprennent un terminal en phase d'exposition et un terminal en phase d'initialisation, et le terminal en phase d'exposition et le terminal en phase d'initialisation communiquent avec le dispositif de réseau en utilisant la paire torsadée dans un mode de multiplexage par répartition dans le temps ou un mode de multiplexage par répartition de fréquence dans un réseau point à multipoint, P2MP ;
l'envoi (S102), par le dispositif de réseau, de l'ensemble de sous-porteuses pilotes aux terminaux dans la phase d'exposition et aux terminaux dans la phase d'initialisation ; et
après la prise d'effet de l'ensemble de sous-porteuses pilotes, la transmission (S103), par le dispositif de réseau sur certaines ou toutes les ressources du domaine temporel de liaison descendante, de certaines ou de toutes les sous-porteuses pilotes comprises dans l'ensemble de sous-porteuses pilotes, la sous-porteuse pilote étant utilisée pour transporter un signal d'horloge, et le signal d'horloge est utilisé par le terminal dans la phase d'exposition pour mettre en oeuvre la synchronisation d'horloge avec le dispositif de réseau ;
la construction (S101), par un dispositif de réseau, d'un ensemble de sous-porteuses pilotes comprenant :
lorsqu'un premier terminal demande à être mis en ligne, l'ajout, par le dispositif de réseau, d'une première sous-porteuse pilote à l'ensemble de sous-porteuses pilotes, la première sous-porteuse pilote étant une sous-porteuse qui est sélectionnée pour être utilisée par le premier terminal et qui ne fait pas partie du pilote ensemble de sous-porteuses ;
lorsqu'un premier terminal demande à se mettre hors ligne, la suppression, par le dispositif de réseau, d'une seconde sous-porteuse pilote de l'ensemble de sous-porteuses pilotes, la seconde sous-porteuse pilote étant une sous-porteuse qui est utilisée uniquement par le premier terminal et ne sera plus utilisée par le premier terminal ; ou
lorsqu'un premier terminal demande la mise à jour de la sélection d'une sous-porteuse pilote, la suppression, par le dispositif de réseau, d'une troisième sous-porteuse pilote de l'ensemble de sous-porteuses pilotes, et/ou l'ajout, par le dispositif de réseau, d'une quatrième sous-porteuse pilote à l'ensemble de sous-porteuses pilotes, la troisième sous-porteuse pilote est une sous-porteuse qui est utilisée uniquement par le premier terminal et ne sera plus utilisée par le premier terminal, et la quatrième sous-porteuse pilote est une sous-porteuse qui est sélectionnée pour être utilisée par le premier terminal dans la sélection mise à jour et qui ne fait pas partie de l'ensemble de sous-porteuses pilotes.

2. Procédé selon la revendication 1, après l'envoi (S102), par le dispositif de réseau, la sous-porteuse pilote étant réglée sur tous les terminaux dans la phase d'exposition et avant la transmission (S103), par le dispositif de réseau sur une partie ou la totalité des ressources de domaine temporelles de liaison descendante, certaines ou toutes les sous-porteuses pilotes comprises dans l'ensemble de sous-porteuses pilotes, le procédé comprend en outre :
la réception, par le dispositif de réseau, d'un ensemble de sous-porteuses de données, d'une première table d'informations correspondant à l'ensemble de sous-porteuses de données, d'une deuxième table d'informations correspondant à l'ensemble de sous-porteuses de données, d'un ensemble de sous-porteuses de canal de gestion robuste, d'une troisième table d'informations correspondant à l'ensemble de sous-porteuses de canal de gestion robuste, et une quatrième table d'informations correspondant à l'ensemble de sous-porteuses de canal de gestion robuste qui sont envoyées par chaque terminal de tous les terminaux dans la phase d'exposition, la première table d'informations étant utilisée pour indiquer une quantité de bits transportés sur chaque sous-porteuse de données dans l'ensemble de sous-porteuses de données, la deuxième table d'informations est utilisée pour indiquer un facteur de réglage fin de puissance correspondant à chaque sous-porteuse de données dans l'ensemble de sous-porteuses de données, la troisième table d'informations est utilisée pour indiquer une quantité de bits transportés sur chaque sous-porteuse de canal de gestion robuste dans l'ensemble de sous-porteuses de canal de gestion robuste, et la quatrième table d'informations est utilisée pour indiquer un facteur de réglage fin de puissance correspondant à chaque sous-porteuse de canal de gestion robuste dans l'ensemble de sous-porteuses de canal de gestion robuste ; et
l'envoi, par le dispositif de réseau, d'un temps effectif de l'ensemble de sous-porteuses pilotes à tous les terminaux dans la phase d'exposition.

3. Procédé selon la revendication 2, l'envoi, par le dispositif de réseau, d'un temps effectif de l'ensemble de sous-porteuses pilotes à tous les terminaux dans la phase d'exposition comprenant :
l'envoi, par le dispositif de réseau, du temps effectif de l'ensemble de sous-porteuses pilotes à tous les terminaux dans la phase d'exposition en utilisant un canal de diffusion.

4. Procédé selon l'une quelconque des revendications 1 à 3, l'envoi (S102), par le dispositif de réseau, de l'ensemble de sous-porteuses pilotes à tous les terminaux dans la phase d'exposition comprenant :
l'envoi, par le dispositif de réseau, de l'ensemble de sous-porteuses pilotes à tous les terminaux dans la phase d'exposition en utilisant le canal de diffusion.

5. Procédé de transmission d'informations de pilote, comprenant :
la réception, par un second terminal, d'un ensemble de sous-porteuses pilotes envoyé par un dispositif de réseau, l'ensemble de sous-porteuses pilotes comprenant des sous-porteuses pilotes sélectionnées pour être utilisées par tous les terminaux dans une phase d'exposition ou une phase d'initialisation, le dispositif de réseau étant connecté à un noeud utilisateur en utilisant une paire torsadée, le noeud utilisateur est connecté à au moins deux terminaux, les au moins deux terminaux comprennent un terminal en phase d'exposition et un terminal en phase d'initialisation, et le terminal en phase d'exposition et le terminal en phase d'initialisation communiquent avec le dispositif de réseau en utilisant la paire torsadée dans un mode de multiplexage par répartition dans le temps ou un mode de multiplexage par répartition de fréquence dans un réseau point à multipoint, P2MP ;
l'envoi, par le second terminal au dispositif de réseau, d'un ensemble de sous-porteuses de données, d'une première table d'informations correspondant à l'ensemble de sous-porteuses de données, d'une deuxième table d'informations correspondant à l'ensemble de sous-porteuses de données, d'un ensemble de sous-porteuses de canal de gestion robuste, d'une troisième table d'informations correspondant à l'ensemble de sous-porteuses de canal de gestion robuste, et à une quatrième table d'informations correspondant à l'ensemble de sous-porteuses de canal de gestion robuste, la première table d'informations étant utilisée pour indiquer une quantité de bits transportés sur chaque sous-porteuse de données dans l'ensemble de sous-porteuses de données, la deuxième table d'informations est utilisé pour indiquer un facteur de réglage fin de puissance correspondant à chaque sous-porteuse de données dans l'ensemble de sous-porteuses de données, la troisième table d'informations est utilisée pour indiquer une quantité de bits transportés sur chaque sous-porteuse de canal de gestion robuste dans l'ensemble de sous-porteuses de canal de gestion robuste, et la quatrième table d'informations est utilisée pour indiquer un facteur de réglage fin de puissance correspondant à chaque sous-porteuse de canal de gestion robuste dans l'ensemble de sous-porteuses de canal de gestion robuste ;
la réception, par le second terminal, d'un temps effectif de l'ensemble de sous-porteuses pilotes envoyé par le dispositif de réseau ; et
après la prise d'effet de l'ensemble de sous-porteuses pilotes, la réception, par le second terminal sur certaines ou toutes les ressources du domaine temporel de liaison descendante, de certaines ou de toutes les sous-porteuses pilotes comprises dans l'ensemble de sous-porteuses pilotes envoyé par le dispositif de réseau, la sous-porteuse pilote étant utilisée pour transporter un signal d'horloge, et le signal d'horloge est utilisé par le second terminal dans la phase d'exposition pour mettre en oeuvre la synchronisation d'horloge avec le dispositif de réseau.

6. Procédé selon la revendication 5, les certaines ressources de domaine temporel de liaison descendante étant des ressources de domaine temporel de liaison descendante utilisées par le dispositif de réseau pour transmettre certaines ou toutes les sous-porteuses pilotes comprises dans l'ensemble de sous-porteuses pilotes ; ou les certaines ressources de domaine temporel de liaison descendante sont des ressources de domaine temporel de liaison descendante qui sont utilisées par le dispositif de réseau pour transmettre certaines ou toutes les sous-porteuses pilotes comprises dans l'ensemble de sous-porteuses pilotes et qui comprennent une sous-porteuse pilote sélectionnée pour une utilisation par le second terminal.

7. Dispositif réseau, comprenant :
une unité de construction (701), configurée pour construire un ensemble de sous-porteuses pilotes, l'ensemble de sous-porteuses pilotes comprenant des sous-porteuses pilotes sélectionnées pour être utilisées par tous les terminaux dans une phase d'exposition ou une phase d'initialisation, le dispositif de réseau étant connecté à un noeud utilisateur en utilisant une paire torsadée, le noeud utilisateur est connecté à au moins deux terminaux, les au moins deux terminaux comprennent un terminal en phase d'exposition et un terminal en phase d'initialisation, et le terminal en phase d'exposition et le terminal en phase d'initialisation communiquent avec le dispositif de réseau en utilisant la paire torsadée dans un mode de multiplexage par répartition dans le temps ou un mode de multiplexage par répartition de fréquence dans un réseau point à multipoint, P2MP ; et
une unité d'envoi (702), configurée pour envoyer l'ensemble de sous-porteuses pilotes au terminal dans la phase d'exposition et au terminal dans la phase d'initialisation,
l'unité d'envoi étant en outre configurée pour : après la prise d'effet de l'ensemble de sous-porteuses pilotes, transmettre, sur certaines ou toutes les ressources du domaine temporel de liaison descendante, certaines ou toutes les sous-porteuses pilotes comprises dans l'ensemble de sous-porteuses pilotes, la sous-porteuse pilote étant utilisée pour transporter un signal d'horloge, et le signal d'horloge est utilisé par le terminal dans la phase d'exposition pour mettre en oeuvre la synchronisation d'horloge avec le dispositif de réseau ;
l'unité de construction étant spécifiquement configurée pour :
lorsqu'un premier terminal demande à être mis en ligne, ajouter une première sous-porteuse pilote à l'ensemble de sous-porteuses pilotes, la première sous-porteuse pilote étant une sous-porteuse qui est sélectionnée pour être utilisée par le premier terminal et qui ne fait pas partie de l'ensemble de sous-porteuses pilotes ;
lorsqu'un premier terminal demande à être mis hors ligne, supprimer une seconde sous-porteuse pilote de l'ensemble de sous-porteuses pilotes, la seconde sous-porteuse pilote étant une sous-porteuse qui est utilisée uniquement par le premier terminal et ne sera plus utilisée par le premier terminal ; ou
lorsqu'un premier terminal demande la mise à jour de la sélection d'une sous-porteuse pilote, supprimer une troisième sous-porteuse pilote de l'ensemble de sous-porteuses pilotes et/ou ajouter une quatrième sous-porteuse pilote à l'ensemble de sous-porteuses pilotes, la troisième sous-porteuse pilote étant une sous-porteuse qui est utilisée uniquement par le premier terminal et ne sera plus utilisée par le premier terminal, et la quatrième sous-porteuse pilote est une sous-porteuse qui est sélectionnée pour une utilisation par le premier terminal dans la sélection mise à jour et qui ne se trouve pas dans l'ensemble de sous-porteuses pilotes.

8. Dispositif de réseau selon la revendication 7, le dispositif de réseau comprenant en outre :
une unité de réception (703), configurée pour : après que l'unité d'envoi a envoyé l'ensemble de sous-porteuses pilotes à tous les terminaux dans la phase d'exposition, et avant que l'unité d'envoi transmette, sur certaines ou toutes les ressources du domaine temporel de liaison descendante, certaines ou toutes les sous-porteuses comprises dans l'ensemble de sous-porteuses pilotes, reçoivent un ensemble de sous-porteuses de données, une première table d'informations correspondant à l'ensemble de sous-porteuses de données, une deuxième table d'informations correspondant à l'ensemble de sous-porteuses de données, un ensemble de sous-porteuses de canal de gestion robuste, une troisième table d'informations correspondant à l'ensemble de sous-porteuses de données, et une quatrième table d'informations correspondant à l'ensemble de sous-porteuses de canal de gestion robuste qui sont envoyées par chaque terminal de tous les terminaux dans la phase d'exposition, la première table d'informations étant utilisée pour indiquer une quantité de bits transportés sur chacune sous-porteuse de données dans l'ensemble de sous-porteuses de données, la deuxième table d'informations est utilisée pour indiquer un facteur de réglage précis de puissance correspondant à chaque sous-porteuse de données de l'ensemble de sous-porteuses de données, la troisième table d'informations est utilisée pour indiquer une quantité de bits transportés sur chaque sous-porteuse de canal de gestion robuste dans l'ensemble de sous-porteuses de canal de gestion robuste, et la quatrième table d'informations est utilisée pour indiquer un facteur de réglage précis de puissance correspondant à chaque sous-porteuse de canal de gestion robuste dans l'ensemble de sous-porteuses de canal de gestion robuste,
l'unité d'envoi (702) étant en outre configurée pour envoyer un temps effectif de l'ensemble de sous-porteuses pilotes à tous les terminaux dans la phase d'exposition.

9. Dispositif de réseau selon la revendication 8, l'unité d'envoi (702) étant configurée pour envoyer un temps effectif de l'ensemble de sous-porteuses pilotes à tous les terminaux dans la phase d'exposition comprenant :
l'unité d'envoi (702) est configurée pour envoyer le temps effectif de l'ensemble de sous-porteuses pilotes à tous les terminaux dans la phase d'exposition en utilisant un canal de diffusion.

10. Dispositif de réseau selon l'une quelconque des revendications 7 à 9, le fait que l'unité d'envoi (702) est configurée pour envoyer l'ensemble de sous-porteuses pilotes à tous les terminaux dans la phase d'exposition comprenant :
l'unité d'envoi (702) est configurée pour envoyer l'ensemble de sous-porteuses pilotes à tous les terminaux dans la phase d'exposition en utilisant le canal de diffusion.

11. Terminal, le terminal étant un second terminal, et le second terminal comprenant :
une unité de réception (901), configurée pour recevoir un ensemble de sous-porteuses pilotes envoyé par un dispositif de réseau, l'ensemble de sous-porteuses pilotes comprenant des sous-porteuses pilotes sélectionnées pour être utilisées par tous les terminaux dans une phase d'exposition ou une phase d'initialisation, le dispositif de réseau étant connecté à un noeud utilisateur en utilisant une paire torsadée, le noeud utilisateur est connecté à au moins deux terminaux, les au moins deux terminaux comprennent un terminal en phase d'exposition et un terminal en phase d'initialisation, et le terminal en phase d'exposition et le terminal en phase d'initialisation communiquent avec le dispositif de réseau en utilisant la paire torsadée dans un mode de multiplexage par répartition dans le temps ou un mode de multiplexage par répartition de fréquence dans un réseau point à multipoint, P2MP ;
une unité d'envoi (902), configurée pour : après que l'unité de réception a reçu l'ensemble de sous-porteuses pilotes envoyé par le dispositif de réseau, et avant que l'unité de réception ne reçoive, sur certaines ou toutes les ressources de domaine temporel de liaison descendante, certaines ou toutes les sous-porteuses pilotes comprises dans l'ensemble de sous-porteuses pilotes envoyé par le dispositif de réseau, envoyer, au dispositif de réseau, un ensemble de sous-porteuses de données, une première table d'informations correspondant à l'ensemble de sous-porteuses de données, une deuxième table d'informations correspondant à l'ensemble de sous-porteuses de données, un ensemble de sous-porteuses de canal de gestion robuste, une troisième table d'informations correspondant à l'ensemble de sous-porteuses de canal de gestion robuste, et une quatrième table d'informations correspondant à l'ensemble de sous-porteuses de canal de gestion robuste, la première table d'informations étant utilisée pour indiquer une quantité de bits transportés sur chaque sous-porteuse de données dans l'ensemble de sous-porteuses de données, la deuxième table d'informations est utilisée pour indiquer un facteur de réglage fin de puissance correspondant à chaque sous-porteuse de données dans l'ensemble de sous-porteuses de données, la troisième table d'informations est utilisée pour indiquer une quantité de bits transportés sur chaque sous-porteuse de canal de gestion robuste dans l'ensemble de sous-porteuses de canal de gestion robuste, et la quatrième table d'informations est utilisé pour indiquer un facteur de réglage fin de puissance correspondant à chaque sous-porteuse de canal de gestion robuste dans l'ensemble de sous-porteuses de canal de gestion robuste,
l'unité de réception (901) étant en outre configurée pour : recevoir un temps effectif de l'ensemble de sous-porteuses pilotes envoyé par le dispositif de réseau ; et, après la prise d'effet de l'ensemble de sous-porteuses pilotes, recevoir, sur certaines ou sur toutes les ressources du domaine temporel de liaison descendante, certaines ou toutes les sous-porteuses pilotes comprises dans l'ensemble de sous-porteuses pilotes envoyé par le dispositif de réseau, la sous-porteuse pilote étant utilisée pour transporter un signal d'horloge, et le signal d'horloge est utilisé par le second terminal dans la phase d'exposition pour mettre en oeuvre la synchronisation d'horloge avec le dispositif de réseau.

12. Terminal selon la revendication 11, les certaines ressources de domaine temporel de liaison descendante étant des ressources de domaine temporel de liaison descendante utilisées par le dispositif de réseau pour transmettre certaines ou toutes les sous-porteuses pilotes comprises dans l'ensemble de sous-porteuses pilotes ; ou les certaines ressources de domaine temporel de liaison descendante sont des ressources de domaine temporel de liaison descendante qui sont utilisées par le dispositif de réseau pour transmettre certaines ou toutes les sous-porteuses pilotes comprises dans l'ensemble de sous-porteuses pilotes et qui comprennent une sous-porteuse pilote sélectionnée pour une utilisation par le second terminal.
